# EUROPEAN PATENT APPLICATION

(11) **EP 0 621 663 A1**
(43) Date of publication of application: **26.10.1994**
(21) Application number: 93106634.4
(22) Date of filing: 23.04.1993
(51) Int. Cl.: H01S 3/06

(54) **Optical fiber amplifier**

(71) Applicant: SUMITOMO ELECTRIC INDUSTRIES, LIMITED, Osaka 541 (JP)
(72) Inventor: Yokouchi, Jungo, c/o Yokohama Works, Yokohama-shi, Kanagawa (JP)
(74) Representative: Lehn, Werner, Dipl.-Ing.

(57) **Abstract**

This invention relates to an optical fiber amplifier including an amplification optical fiber (22) doped with an active material for the optical amplification for amplifying signal light by applying the signal light and pumping light to the amplification optical fiber to amplify the signal light. The optical fiber amplifier comprises optical coupling/dividing means (28) for coupling pumping light emitted from a plurality of light sources for optical pumping (25,27), and branching the coupled light into output forward pumping light and backward pumping light, a first optical coupler (20) for coupling the forward pumping light with signal light to apply the coupled light to the input terminal of the amplification optical fiber, and a second coupler (23) for coupling the backward pumping light with the amplified signal light to apply the coupled light to the output terminal of the amplification optical fiber, whereby stable amplification and a good redundancy can be provided by the forward and the backward pumping light incident both on the input and the output terminals.

## Description

### BACKGROUND OF THE INVENTION

For the realization of longer-distance transmission and super-capacities of optical transmission systems, developments and studies on repeaters, booster amplifiers, etc. using optical fiber amplifiers in place of EO/OE conversion have been recently noted. An optical fiber amplifier uses as an amplification medium an amplification optical fiber having the core doped with a trace of a rare earth element an active ions, and does the optical amplification by stimulated emission when signal light is incident simultaneously with the pumping light.

To fulfil longer-distance transmission and super-capacities of the optical transmission systems, stable amplifying ratios and high reliability are required. The prior art of the optical fiber amplifier relevant to these requirements are U.S. Patent Nos. 5138621, 4723804, 4674830 and 5125066.

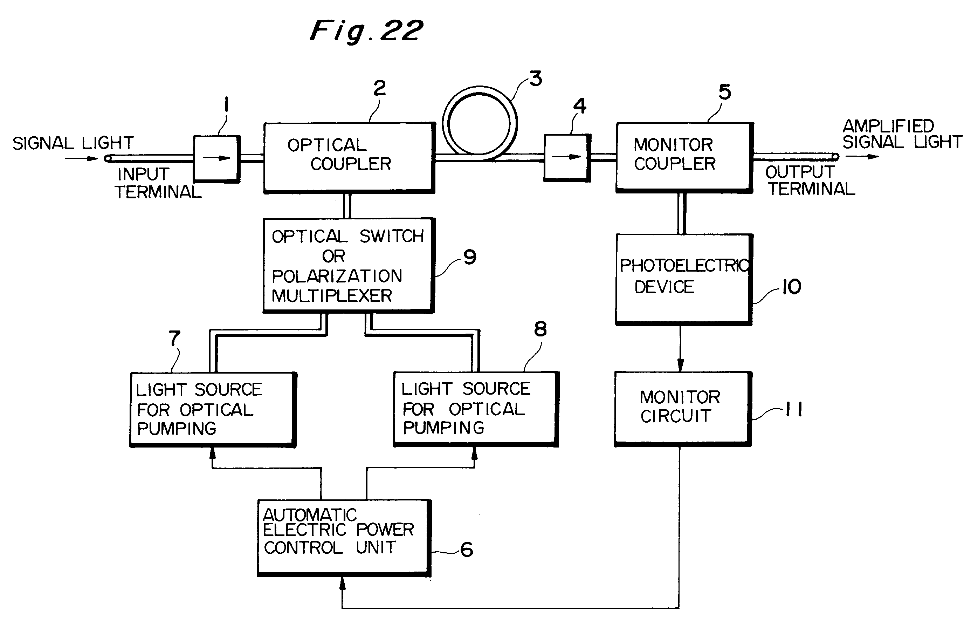

A conventional optical fiber amplifier has the structure of, e.g., FIG 22. This conventional optical fiber amplifier comprises an optical amplification passage including an optical isolator 1, an optical coupler 2, an amplification optical fiber 3, an optical isolator 4, and a monitor coupler 5 inserted in an optical fiber for signal light to be incident on the input terminal thereof in the stated order, whereby the signal light is amplified by the amplification optical fiber and outputted through the output terminal. There are further provided a pair of light sources for optical pumping 7, 8 for generating pumping light (laser beams) by an electric power supplied by an automatic electric power control unit 6, and an optical switch or a polarization multiplier 9 for applying the pumping light to the optical coupler 2.

The monitor coupler 5 branches a part of the amplified signal light supplied by the optical isolator 4 and propagates the name to a photoelectric device 10, such as a photodiode or others. The monitor unit 11 amplifies a photoelectric signal from the photoelectric device 10 to supply the same to the automatic electric power control unit 6. The automatic electric power control unit 6 feedback-controls electric powers to the light sources 7, 8 so that the photoelectric signal from the monitor circuit 11 always have a constant level, whereby the pumping light to the amplification optical fiber 3 always has a constant intensity and a constant amplifying ratio.

In the case that the optical switch 9 is provided by an optical fiber amplifier, in a normal operation the optical switch 9 operates to apply only the pumping light from the light source 7 to the optical coupler 2, and signal light and the pumping light are coupled by the optical coupler 2 to enter the amplification optical fiber 3. The signal light is amplified there. When an output intensity of the pumping light from the light source 7 is deteriorated, the optical switch 9 changes over the pumping light to the pumping light from the light source 8 to apply the latter to the optical coupler 2.

In the case that the optical fiber amplifier is provided with a polarization multiplexer 9, the polarization multiplexer 9 synthesizes the pumping light from the light sources 7, 8 and applies the synthesized pumping light to the optical coupler 2, and the amplification optical fiber 3 amplifies signal light. When an illuminance of the pumping light of one of the light sources 7, 8 lowers, the automatic electric power control unit 6 increases an intensity of the pumping light of the other light source, so that a constant intensity of the pumping light applied to the optical coupler 2 from the polarization multiplier 9 is always maintained.

### SUMMARY OF THE INVENTION

An object of this invention is to provide an optical fiber amplifier having a redundancy that its amplifying ratio can be more stabilized in comparison with the prior art, and deterioration of the characteristics can be automatically prevented.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific samples, while indicating preferred embodiments of the invention, are given by way of illustration only, since various changes and modifications within the spirit and scope of the invention will become apparent to those skilled in the art form this detailed description.

### BRIEF DESCRIPTION OF THE DRAWINGS

This invention will be explained clearly in terms of its structure and functional effects by means of embodiments of this invention which will be described with reference to the following drawings.

FIG. 1 is a block diagram of a first embodiment of this invention.

FIG. 2 is a block diagram of a second embodiment of this invention.

FIG. 3 is a block diagram of a third embodiment of this invention.

FIG. 4 is a block diagram of an fourth embodiment of this invention.

FIG. 5 is a block diagram of a fifth embodiment of this invention.

FIG. 6 is a block diagram of a sixth embodiment of this invention.

FIG. 7 is a block diagram of a seventh embodiment of this invention.

FIG. 8 is a block diagram of a eighth embodiment of this invention.

FIG. 9 is a block diagram of an ninth embodiment of this invention.

FIG. 10 is a block diagram of a tenth embodiment of this invention.

FIG. 11 is a block diagram of a eleventh embodiment of this invention.

FIG. 12 is a block diagram of a twelfth embodiment of this invention.

FIG. 13 is a block diagram of a thirteenth embodiment of this invention.

FIG. 14 is a block diagram of a fourteenth embodiment of this invention.

FIG. 15 is a block diagram of a fifteenth embodiment of this invention,

FIG. 16 is a block diagram of a sixteenth embodiment of this invention.

FIG. 17 is a block diagram of a seventeenth embodiment of this invention.

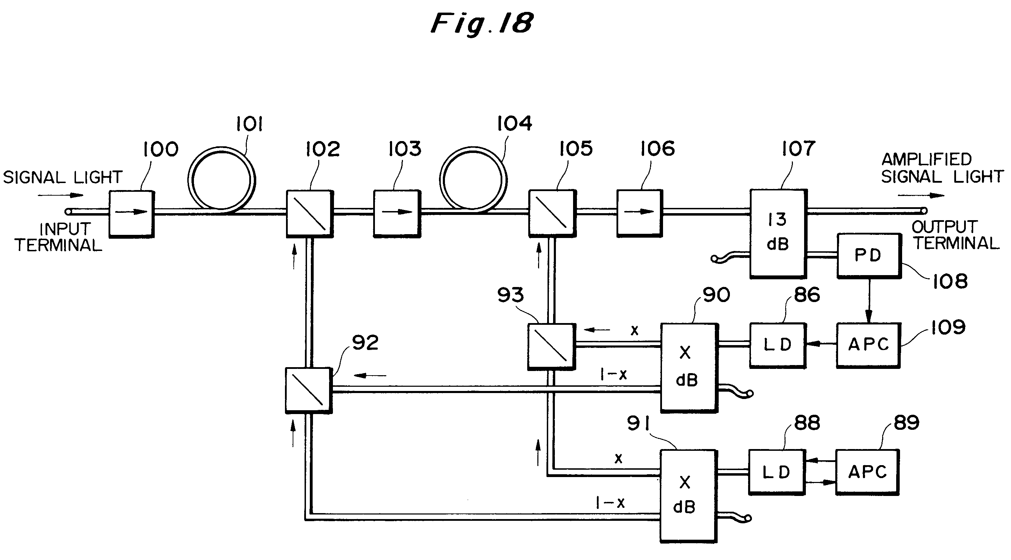

FIG. 18 is a block diagram of an eighteenth embodiment of this invention.

FIG. 19 is a block diagram of a nineteenth embodiment of this invention.

FIG. 20 is a block diagram of a twentieth embodiment of this invention.

FIG. 21 is a block diagram of a twenty-first embodiment of this invention.

FIG. 22 is a block diagram of the conventional optical fiber amplifier.

### DESCRIPTION OF THE PREFERRED EMBODIMENTS

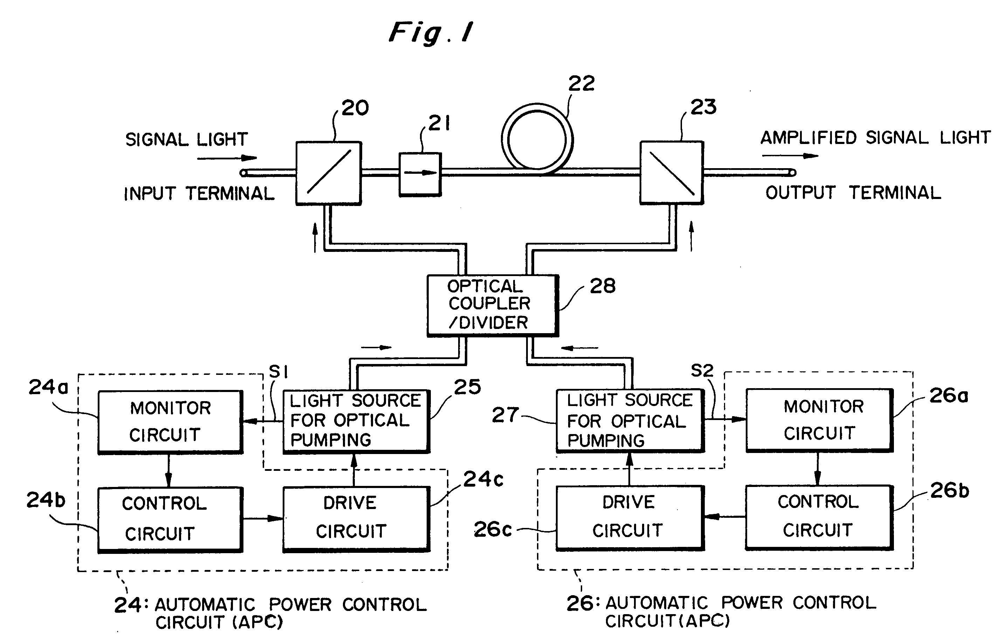

FIG. 1 is a block diagram of the optical fiber amplifier according to a first embodiment of this invention. The optical fiber amplifier according to this embodiment includes an optical amplification passage having a first optical coupler 20, an optical isolator 21, an amplification optical fiber 22, and a second optical coupler 23 inserted, in the stated order, in an optical fiber on which signal light is incident at the input terminal thereof. The signal light amplified by the amplification optical fiber 22 is outputted from the output terminal.

There are further provided a light source for optical pumping 25 for generating pumping light by an electric power supplied by a drive circuit 24c built in an automatic power control unit 24 (hereinafter called APC unit), and a light source for optical pumping 27 for generating pumping light by an electric power supplied by a drive circuit 26c built in an APC unit 26, and an optical coupler/divider 28 which couples the pumping light supplied from the light sources 25, 27 through optical fibers and divides the coupled pumping light into forward pumping light and backward pumping light, and supplies the forward pumping light to a first optical coupler 20 through an optical fiber while supplying the backward pumping light to a second optical coupler 23 through an optical fiber.

The first optical coupler 20 couples the signal light with the forward pumping light to supply the coupled light to the input terminal of the amplification optical fiber 22. The second optical coupler 23 supplies the backward pumping light to the output terminal of the amplification optical fiber 22 while propagating the signal light amplified by the amplification optical fiber 22 to the output terminal of the optical fiber.

Accordingly the amplification optical fiber 22 is pumped by the forward and the backward pumping light which are incident respectively on the input and the output terminals thereof and amplifies the signal light.

The light sources for optical pumping 25, 27 generate laser beams of, e.g., a 1.48 µm-wavelength as the pumping light, and are provided by semiconductor lasers or others whose emission intensity is variably controlled by powers supplied by the drive circuits 24c, 26c. In each of the light sources 26, 27 there is built in a photoelectric device, such as a photodiode or others, which photoelectrically converts a part of the pumping light and detects an intensity of the piping light. Photoelectric signals S1, S2 are incessantly supplied from these photoelectric devices to the respective monitor circuits 24a, 26a incorporated in the APC units 24, 27.

The monitor circuit 24a includes a comparator or others for comparing the photoelectric signals S1 with an independently preset reference voltage one after another and supplies the comparison results to the control circuit 24b. The control circuit 24b judges intensity changes of the pumping light from the light source 25, based on the comparison results and automatically controls a supply power of the drive circuit 24c so that the pumping light from the light source 25 always has a constant intensity. On the other hand, the monitor circuit 26a includes a comparator or others for comparing the photoelectric signals S2 with an independently preset reference voltage one after another and supplies the comparison results to the control circuit 26b. The control circuit 26b decides intensity changes of the pumping light of the light source 27, based on the comparison results and automatically controls a supply power from the drive circuit 26c so that the pumping light from the light source 27 always has a constant intensity.

Thus, the APC units 24, 26 do their function of feedback-controlling the light sources 25, 27 separately so as to always maintain a constant intensity of a total of the pumping light to be supplied to the optical coupler/divider 28.

The optical coupler/divider 28 is provided by a coupler of a 3 dB-insertion loss, and couples the pumping light from the light sources 25, 27 and divides the coupled pumping light into forward pumping light and backward pumping light by a set intensity ratio (m : n). In this embodiment, the coupled pumping light is divided by a 1:1 intensity ratio.

The first and the second optical couplers 20, 23 are provided by fused taper type fiber couplers or others, which couple light of different wavelengths for wavelength-division-multiplexing transmission. The optical coupler 20 propagates the forward pumping light of a 1.48 µm-wavelength supplied from the optical coupler/divider 28 and signal light of a 1.55 µm-wavelength to the amplification optical fiber 22. The optical coupler 23 propagates the backward pumping light of a 1.48 µm-wavelength supplied from the optical coupler/divider 28 while propagating the 1.55 µm-wavelength signal light amplified by the amplification optical fiber 22 to the output terminal.

The amplification optical fiber 22 is an optical fiber having the core doped with a rare earth element and photo-amplifies the 1.55 µm-wavelength signal light by stimulated emission caused by the forward and the backward pumping light. The amplification optical fiber is provided by an Er-doped silica glass fiber in this embodiment.

The optical isolator 21 is a polarized wave-independent optical isolator which removes reflected return light from the amplification optical fiber 22 to the optical coupler 20.

According to this embodiment having this structure, even in a case that the light sources 25, 27 have different pumping light intensities from each other, intensities of the forward and the backward pumping light to be supplied to the amplification optical fiber 22 are always equal, and in addition, an intensity of a total of the forward and the backward pumping light is always maintained constant. Accordingly the amplification optical fiber 22 always has a constant amplifying ratio.

Since the light sources 25, 27 are feedback-controlled independently from each other by the respective APC units 24, 26, loads are not concentrated on one of the light sources, as done in the prior art. Accordingly a good redundancy can be realized.

The amplification optical fiber 22, in the forward pumping, in which both the signal light and the forward pumping light are incident on the input terminal thereof, has the advantage that signal light of a wide wavelength range is amplified with low noise figures (NF), and the disadvantage that the efficiency of the energy conversion from the pumping light to the signal light is low. In contrast to this, in the backward pumping, in which the signal light is incident on the input terminal of the amplification optical fiber 22 while the pumping light is incident on the output terminal thereof, the amplification optical fiber 22 has the advantage that the efficiency of the energy conversion from the pumping light to the signal light is high, and the disadvantage that only the signal light of a certain wavelength is amplified with low noise figures. Thus the amplification optical fiber 22 has both the advantageous and the disadvantageous properties. According to this embodiment, however, because the pumping light is incident on both the input and the output terminals of the amplification optical fiber, the amplification optical fiber can use the advantages that signal light of a wide wavelength range can be amplified with low noise figures, and the efficiency of the energy conversion from the piping light to signal light is high.

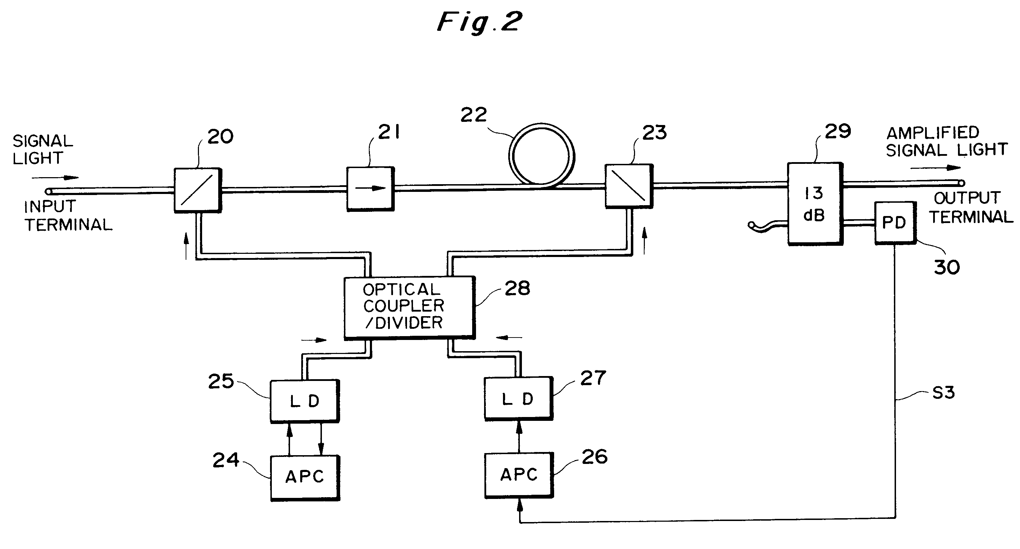

Next a second embodiment of this invention will be explained with reference to FIG. 2. In FIG. 2 members which are common with FIG. 1 and are counterparts of FIG. 1 are represented by the same reference numerals as in FIG. 1.

Structural differences of the second embodiment from the first embodiment will be mainly explained for the description of the second embodiment. In FIG. 2 an optical directional coupler 29 is inserted between the output terminal of a second optical coupler 23 and the output terminal of an optical fiber for amplified signal light to be outputted from. The optical directional coupler 29 branches to photoelectric means 30, such as a photodiode or others, the signal light (amplified signal light) which has propagated from the second optical couple: 23 to the output terminal. The photoelectric moans 30 photoelectrically converts a part of the amplified signal light into a photoelectric signal S3 and supplies the same to an APC unit 26.

As does in the first embodiment, the APC unit 24 detects a part of the pumping light of a first light source for optical pumping 25 to perform feedback control for maintaining a constant intensity of the pumping light of the first light source 25.

On the other hand, an APC unit 26 receives a photoelectric signal S3 from the photoelectric means 30 through a monitor circuit built in the APU unit 26; and a control unit built in the APC unit 26 feedback-controls an intensity of the pumping light of the second light source for optical pumping 27 so that the photoelectric signal S3 has always a constant level (voltage or current level).

Thus, according to this embodiment, the first light source 25 is always feedback-controlled so that its pumping light always has a constant intensity, and on the other hand the second pumping light source 27 is feedback-controlled so that its pumping light always has an intensity which allows the signal light (amplified signal light) to be supplied to the output terminal to have a constant intensity.

Accordingly, in thin embodiment an well, an intensity of a total of the forward and the backward pumping light to be incident on the amplification optical fiber in constant, whereby a constant amplifying ratio of the amplification optical fiber 22 is retained, and signal light (amplified signal light) of a constant intensity can be outputted.

Since the light sources 25, 27 are feedback-controlled independently of each other by the respective APC units 24, 26, loads are not concentrated on one of the light sources, as done in the prior art. Accordingly a good redundancy can be realized.

Because the pumping light is incident on both the input and the output terminals of the amplification optical fiber, the amplification optical fiber can use the advantages that signal light of a wide wavelength range can be amplified with low noise figures, and the efficiency of the energy conversion from the pumping light to signal light is high.

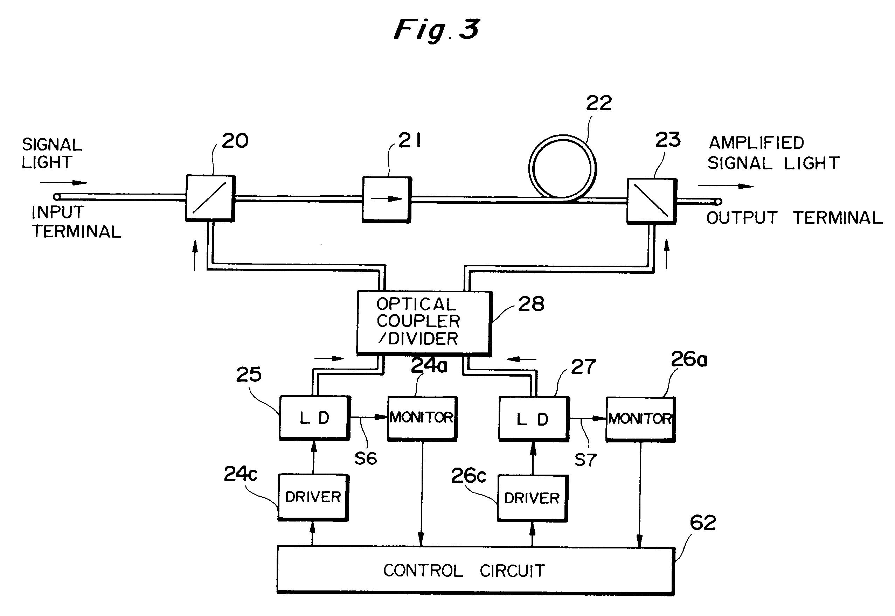

FIG. 3 is a block diagram of a third embodiment of this invention. In FIG. 3 members which are common with FIG. 1 and are counterparts of FIG. 1 are represented by the same reference numerals as in FIG. 1.

In FIG. 3 there is provided an optical amplification passage including a first optical coupler 20, an optical isolator 21, a first amplification optical fiber 22, a second optical coupler 23 inserted, in the stated order, in an optical fiber for signal light to be incident on the input terminal thereof. Signal light amplified by the amplification optical fiber 22 is outputted from the output terminal of the optical fiber.

An optical coupler/divider 28 couples pumping light from a first light source for optical pumping 25, and a second light source for optical pumping 27 and divides the coupled pumping light into forward pumping light and backward pumping light of equal intensities, and supplies the forward pumping light and the backward pumping light respectively to the first optical coupler 20 and to the second optical coupler 23.

The first and the second optical couplers 20, 23 are fused taper type optical couplers or others which division-wavelength-multiplexing transmit light of different wavelengths. The first optical coupler 20 supplies the forward pumping light of a 1.48 µm-wavelength from the optical coupler/divider 28 and signal light of a 1.55 µm-wavelength to the input terminal of the amplification optical fiber 22. On the other hand, the second optical coupler 23 supplies the backward pumping light of a 1.48 µm-wavelength to the output terminal for the amplification optical fiber 22 while propagating the amplified 1.55 µm-wavelength signal light by the amplification optical fiber 22 to the output terminal of the optical fiber. The amplification optical fiber 22 is an optical fiber having the core doped with a rare earth element and photo-amplifies the 1.55 µm-wavelength signal light by stimulated emission caused by the forward and the backward pumping light.

The optical isolator 21 is a polarized wave-independent optical isolator which removes the reflected return light from the amplification optical fiber 22 to the first optical coupler 20.

Each the first and the second light sources 25, 27 has a photoelectric device, such as a photodiode or others, built in for photoelectrically converting a part of the pumping light to detect an emission intensity of the pumping light. The photoelectric signals S6, S7 outputted from the photoelectric devices are incessantly supplied to a control circuit 62 through monitor circuits 24a, 26a.

The control circuit 62 detects the photoelectric signals S6, S7 one after another by, e.g., program processing by a microcomputer, and automatically controls powers to be supplied by drive circuits 24c, 26c to the first and the second light sources 25, 27 so that a total of the photoelectric signals S6, S7 is constant.

The operation of this embodiment will be explained.

As described above, the control circuit 62 performs automatic control for maintaining an intensity I₀ of a total of intensities of the pumping light of both light sources 25, 27 always constant. As initialization conditions satisfying this condition, the control circuit 26 can select a first initialization in which normally one of the light sources 25, 27 is set in operation, and the other is set out of operation, or a second initialization in which normally both of the light sources 25, 27 are set in operation.

The first initialization exemplified by the case in which the light source 25 is operated, and the light source 27 is stopped, so that the pumping light only from the light source 25 is supplied to the optical coupler/divider 28 will be explained.

The pumping light of a required intensity I₀ is divided into forward pumping light and a backward pumping light, of equal intensities of I₀/2. The forward pumping light is supplied to the input terminal of the amplification optical fiber 22 through the first optical coupler 20, and the backward pumping light is supplied to the output terminal of the amplification optical fiber 22 through the second optical coupler 23. Consequently the rare earth element of the amplification optical fiber 12 is excited by the pumping light substantially equal to the intensity I₀, and the signal light is amplified.

Then the control circuit 62 automatically controls, as described above, an intensity of the pumping light of the light source 25, and when the detected signal S6 changes in an allowable range, the control circuit instantaneously increases or decreases a supply power from the drive circuit 24c to the light source 25, whereby an intensity of the pumping light is maintained constant.

When an intensity of the pumping light of the light source 25 greatly lowers to fail to satisfy the set condition, the control circuit 62 detects this deviating condition, based on the detected signal S6, controls the drive circuit 24c to stop the power supply to the light source 25 and concurrently on the other hand to start the power supply to the light source 27. Then the control performed on the light source 25 follows on the light source 27.

Thus, even when the light source 25 malfunctions due to, e.g.,deterioration, the amplification optical fiber 22 is stably pumped continuously with the forward and the backward pumping light of the pumping light from the light source 27, whereby an amplification ratio can be always maintained constant. Because the operation switch from the light source 25 to the light source 27 is quick, instantaneous interruptions accompanying the use of the conventional optical switches do not take place.

Next, the second initialization in which both the light sources 25, 27 are set in operation, and the pumping light from both light sources is incident on the optical coupler/divider 28 will be explained.

In this case, to retain constant an intensity I₀ of a total of intensities of the pumping light to be incident on the amplification optical fiber 22, intensities of the pumping light of both the light sources are set at I₀/2.

The pumping light from both the light sources 25, 27 are coupled by the optical coupler/divider 28 and divided into forward pumping light and backward pumping light, of equal intensities of I₀/2. The forward pumping light of both pumping light is incident on the input terminal of the amplification optical fiber 22 through the first optical coupler 20, and the backward pumping light of both pumping light is incident on the output terminal of the amplification optical fiber 22.

Consequently the rare earth element of the amplification optical fiber 22 is excited by the pumping light of an I₀ intensity, and the signal light is amplified.

Then, the control circuit 62 automatically controls, as described above, intensities of the pumping light from both light sources 25, 27 to separately increase or decrease supply powers from the drive circuits 24c, 26c to the respective light sources 25, 27, whereby intensities of the light sources are retained constant.

For example, when an intensity of the pumping light of one of the lights sources greatly lowers to fail to satisfy the set condition, the control circuit 62 detects this deviating state, based on the detected signal S6 and controls the drive circuit 26c to increase a supply power to the other light source 27, so that an intensity of a total of the pumping light of the light sources 25, 27 can be I₀. Hereafter, the control circuit 62 performs the automatic control for maintaining an intensity of a total of both pumping light to be a set intensity I₀ even when there is a difference between an intensity of the pumping light of the light source 25 operating in the deviating state and that of the normally operating light source 27.

Thus, according to this embodiment, because intensities of the forward pumping light and the backward pumping light to be incident on the amplification optical fiber 22 are always maintained constant, the amplification ratio of amplification optical fiber is stabilized constant, and an optical fiber amplifier of high precision can be realized. Even when one of the light sources 25, 27 is deteriorated, the automatic control is performed so as to maintain constant intensities of the pumping light to be incident on the amplification optical fiber 22. Accordingly a good redundancy can be realized. Furthermore, because the amplification optical fiber 22 is supplied with the pumping light at both the input and the output terminals, the amplification optical fiber has the advantages of amplifying signal light of a wide wavelength range with low noise figures and has high efficiency of the energy conversion from the pumping light to the signal light.

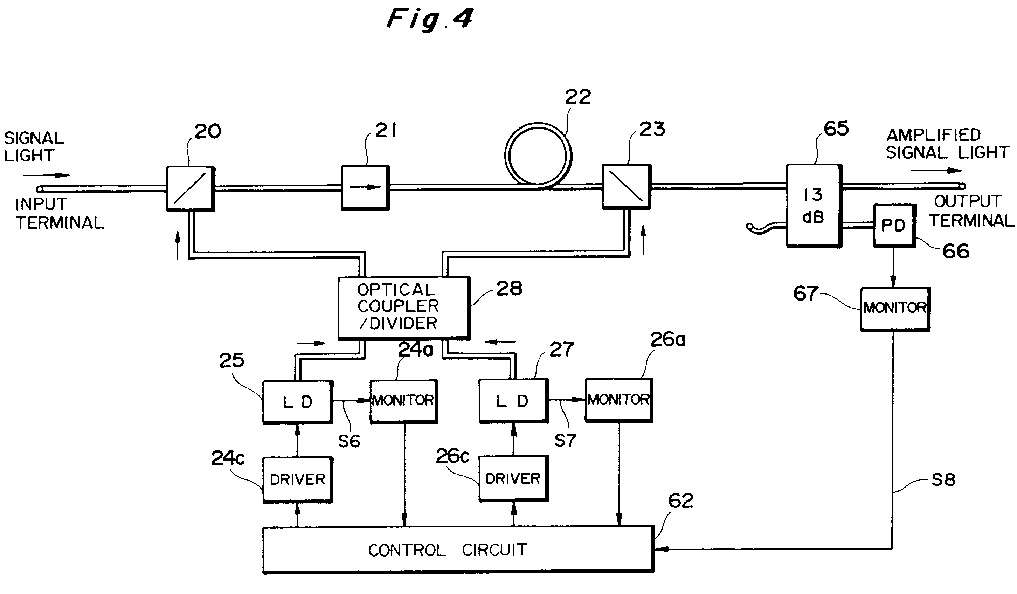

Then an fourth embodiment of this invention will be explained with reference to FIG. 4. In FIG. 4 members which are common with FIG. 3 and are counterparts of FIG. 3 are represented by the same reference numerals as in FIG. 3.

Structural differences of the fourth embodiment from the third embodiment will be mainly explained for the description of the fourth embodiment. In FIG. 4, an optical directional coupler 65 is inserted between the output terminal of a second optical coupler 23, and the output terminal of an optical fiber, and branches to photoelectric means 66, such as a photodiode or others, signal light (amplified signal light) from the second optical coupler 23. The photoelectric means 66 photoelectrically converts the branched amplified signal light into a photoelectric signal S8 and supplies the photoelectric signal S8 to a monitor circuit 67. The monitor circuit 67 amplifies the photoelectric signal S8 to supply the same to a control circuit 62. That is, the control circuit 62 is fed back with the detected signal S6 indicative of an intensity of the pumping light of a first light source for optical pumping 25, the detected signal S7 indicative of an intensity of the pumping light of a second light source for optical pumping, and the photoelectric signal S8 indicative of an intensity of signal light (amplified signal light).

The operation of this embodiment will be explained.

In this embodiment, the control circuit 62 performs automatic control for always maintaining an intensity I₀ of a total of the pumping light of both light sources 25, 27. As initialization conditions satisfying this condition, the control circuit 62 selects a first initialization in which normally one of the light sources 25, 27 is in operation, and the other is out of operation, or a second initialization in which normally both light sources 25, 27 are in operation.

As the first initialization, the case in which the light source 25 is operated, the light source 27 being stopped, so that the pumping light of only the light source 25 is incident on the optical coupler/divider 28.

The pumping light of a set intensity I₀ is divided by the optical coupler/divider into forward pumping light and backward pumping light, of equal intensities of I₀/2. The forward pumping light is supplied to the input terminal of the amplification optical fiber 22 through a first optical coupler. The backward pumping light is supplied to the output terminal of the amplification optical fiber 22 through a second optical couplet 23. Consequently the rare earth element of the amplification optical fiber 22 is excited by the pumping light of an intensity substantially equal to the set intensity I₀ from the pumping light source 25, and signal light is amplified.

The control circuit 62 continuously detects intensities of the pumping light of the pumping light source 25, based on the detected signals S6, and continuously detects intensities of the amplified signal light, based on the photoelectric signal S8, so that a drive circuit 24c controls a supply power to the light source 25 to prohibit multiplying deflections of the signals S6, S8. Thus, an intensity of the pumping light of the light source 25 is maintained constant.

When the pumping light of the light source 25 greatly lowers to fail to satisfy the set condition, the control circuit 52 detects this deviating state, based on the detected signal S6 and controls the drive circuit 24c to stop the power supply to the light source 25 and concurrently on the other hand to start the power supply to the light source 27. Then the same control as on the light source 25 is performed on the light source 27.

That is, after the drive is switched to the light source 27, the control circuit 62 continuously detects intensities of the pumping light of the light source 27, based on the signals S7 while detecting intensities of the amplified signal light, based on the photoelectric signal S8 and controls the drive circuit 26c to control a supply power to the light source 27 so that the multiplexing deflections of the signals S7 and S8 are prohibited. Accordingly an intensity of the piping light of the light source 27 is maintained constant.

Thus, when the light source 25 is in operation, the amplification optical fiber 22 is continuously pumped stably by the forward and the backward pumping light of the pumping light from the light source 25. Even when the light source 25 malfunctions due to the deterioration of the light source 25, the amplification optical fiber 22 is continuously pumped stably by the forward and the backward pumping light of the light piping light from the light source 27 the light source 25 has been switched to. A constant amplifying ratio can be always maintained. An intensity of the signal light (amplified signal light) outputted from the output terminal can be retained constant.

The switching from the light source 25 to the light source 27 is conducted at high speed. Instantaneous interruptions accompanying the use of the conventional optical switch do not take place.

Then, as the second initialization, the case that normally both the light sources 25, 27 are in operation to supply the pumping light of both the light sources to the optical coupler/divider 28 will be explained.

In this case, intensities of the pumping light of both light sources 25, 27 are set at I₀/2 so that an intensity I₀ of a total of the pumping light to be incident on the amplification optical fiber 22 is maintained constant.

The pumping light from both light sources 25, 27 are coupled by the optical coupler/divider 28 and divided into the forward and the backward pumping light, of equal intensities of I₀/2. The forward pumping light is supplied to the input terminal,of the amplification optical fiber 22 through the optical coupler 20, and the backward pumping light is supplied to the output terminal of the amplification optical fiber 22 through the optical coupler 23.

Consequently the rare earth element of the amplification optical fiber 22 is excited by the pumping light of an I₀ intensity, and the signal light is amplified.

In this case, to maintain constant an intensity I₀ of a total of the pumping light incident on the amplification optical fiber 22, intensities of the pumping light of both light sources 25, 27 are set at I₀/2.

The pumping light of both light sources 25, 27 are coupled by the optical coupler/divider 28 and divided into forward and backward pumping light. The forward pumping light is supplied to the input terminal of the amplification optical fiber 22 through the optical couple: 20, and the backward piping light is supplied to the output terminal of the amplification optical fiber 22 through the optical coupler 23.

Consequently the rare earth element of the amplification optical fiber 22 is excited by the pumping light of an I₀ intensity, and the signal is amplified.

The control circuit 62 causes the drive circuit 24c to control a supply power to the light source 25 so as to prohibit multiplying deflections of the detected signal S6 from the monitor circuits 24a, 67 and the photoelectric signal S8, and also causes the drive circuit 26c to control a supply power to the light source 27 so as to prohibit multiplexing deflections of the detected signal S7 from the monitor circuits 26a, 67 and the photoelectric signal S8. Accordingly an intensity I₀ of a total of the pumping light of the light sources 25, 27 are maintained constant, and accordingly the amplifying ratio of the amplification optical fiber 22 is stabilized constant, and the amplified signal light has a constant intensity.

For example, when an intensity of the pumping light of one of the lights sources greatly lowers to fail to satisfy the set condition, the control circuit 62 detects this deviating state, based on the detected signal S6 and controls the drive circuit 26c to increase a supply power to the other light source 27, so that an intensity of a total of the pumping light of the light sources 25, 27 is I₀. Hereafter, the control circuit 62 automatically causes the drive circuit associated with the light source 25, which operates out of the set condition, to control a supply power to the light source 25 so that multiplexing deflections of the detected signal S6 from the monitor circuits 24a, 67 and the photoelectric signal S8 are prohibited, and also causes the drive circuit 24a to control a supply power to the light source 27 so that multiplexing deflections of the detected signal S7 from the monitor circuits 26a, 67 and the photoelectric signal S8 are prohibited. Consequently even when there is a difference in intensity between the pumping light of both light sources 25, 27, a total of the pumping light both the light sources 25, 27 is maintained constant. Consequently an amplifying ratio of the amplification optical fiber 22 is stabilized constant, and the amplified signal light has a constant intensity.

Thus, according to this embodiment, because intensities of the forward pumping light and the backward pumping light to be incident on the amplification optical fiber 22 are always maintained constant, the amplification ratio of amplification optical fiber is stabilized constant, and an optical fiber amplifier of high precision can be realized. Even when one of the light sources 25, 27 is deteriorated, the automatic control is performed so as to maintain constant intensities of the pumping light to be incident on the amplification optical fiber 22. Accordingly a good redundancy can be realized. Furthermore, because the amplification optical fiber 22 is supplied with the pumping light at both the input and the output terminals, the amplification optical fiber has the advantages of amplifying signal light of a wide wavelength range with low noise figures and has good efficiency of the energy conversion from the pumping light to the signal light.

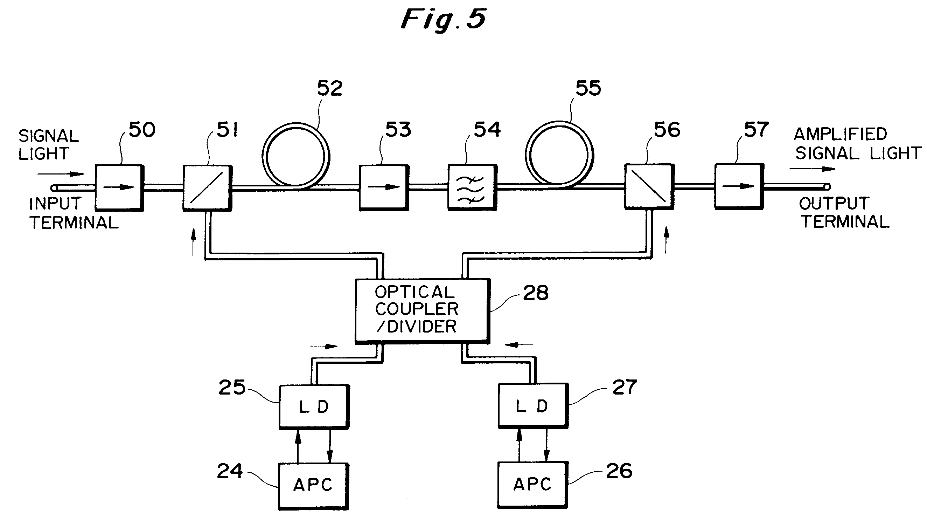

FIG. 5 is a block diagram of a fifth embodiment. In FIG. 5 members which are common with FIG. 1 and are counterparts of FIG. 1 are represented by the same reference numerals as in FIG. 1.

Structural differences of the fifth embodiment from the first embodiment will be mainly explained for the description of the fifth embodiment. In FIG. 5 there is provided an optical amplification passage including a first optical isolator 50, a first optical coupler 51, a first amplification optical fiber 52, a second optical isolator 53, a band-pass filter 54, a second amplification optical fiber 55, a second amplification optical fiber 56, and a third optical isolator 57 inserted, in the stated, order, in an optical fiber for signal light to be incident on the input terminal thereof. The signal light supplied to the input terminal of the optical fiber is amplified by the first and the second amplification optical fibers, and the amplified signal light is outputted from the output terminal of the optical fiber.

As do in the first embodiment, APC units 24, 26 perform feedback-control so that constant intensities of the 1.48 µm-wavelength pumping light respectively emitted from a first and a second light sources 25, 27 are maintained, and the optical coupler/divider 28 couples the pumping light and divides the coupled piping light into forward and backward pumping light of equal intensities. The forward pumping light is supplied to the first optical coupler 51, and the backward pumping light is supplied to the optical coupler 56.

The first and the second optical couplers 51, 56 are provided by fused taper type fiber couplers or others, which couple light of different wavelengths for its wavelength-division multiplexing transmission. One 51 of the optical couplers couples the forward pumping light and signal light of a 1.55 µm-wavelength and supplies the coupled light to the input terminal of the first amplification optical fiber 52. The other 56 of the optical couplers supplies the backward pumping light to the output terminal of the second amplification optical fiber 55 while propagating the signal light amplified by the second amplification optical fiber 55 to the output terminal through the thin optical isolator 57.

The first and the second amplification optical fibers 52, 55 are optical fibers having the cores doped with a rare earth element and photo-amplify the 1.55 µm-wavelength signal light by the stimulated emission caused by the forward and the backward pumping light.

The first to the third optical isolators 50, 53, 57 are polarized wave-independent isolators for removing reflected return light.

The band-pass filter 54 is an optical filter which transmits only signal light having a set wavelength range centered on 1.55 µm, and removes unnecessary wavelength components from the signal light which has been amplified by the first amplification optical fiber 55 and then passed through the second optical isolator 53 so as to supply the noiseless signal light to the second amplification optical fiber 55.

According to this embodiment, the feedback-control is performed so that constant intensities of the pumping light of the respective first and the second light sources 25, 27 are always maintained, and in addition intensities of the forward and the backward pumping light are equal to each other. Consequently an amplifying ratio of the first and the second amplification optical fibers 52, 55 is always retained constant. Consequently the signal light (amplified signal light) outputted from the output terminal is always maintained constant.

Because the light sources 25, 27 are feedback-controlled by the APC units 24, 26, loads are not concentrated on only one of the light sources, and a good redundancy can be realized.

Furthermore, because the first amplification optical fiber 52 is excited by the forward pumping by the forward pumping light, the first amplification optical fiber 52 uses the advantage that signal light of a wide wavelength range is amplified with low noise figures. On the other hand, because the second amplification optical fiber 55 is excited by the backward piping by the backward pumping light, the second amplification optical fiber 55 uses the advantage that the efficiency of the energy conversion from the pumping light to the signal light is high. An optical fiber amplifier having the advantages of both amplification optical fibers, i.e., the advantages that signal light of a wide wavelength range is amplified with low noise figures, and the efficiency of the energy conversion from the pumping light to the signal light is high can be realized.

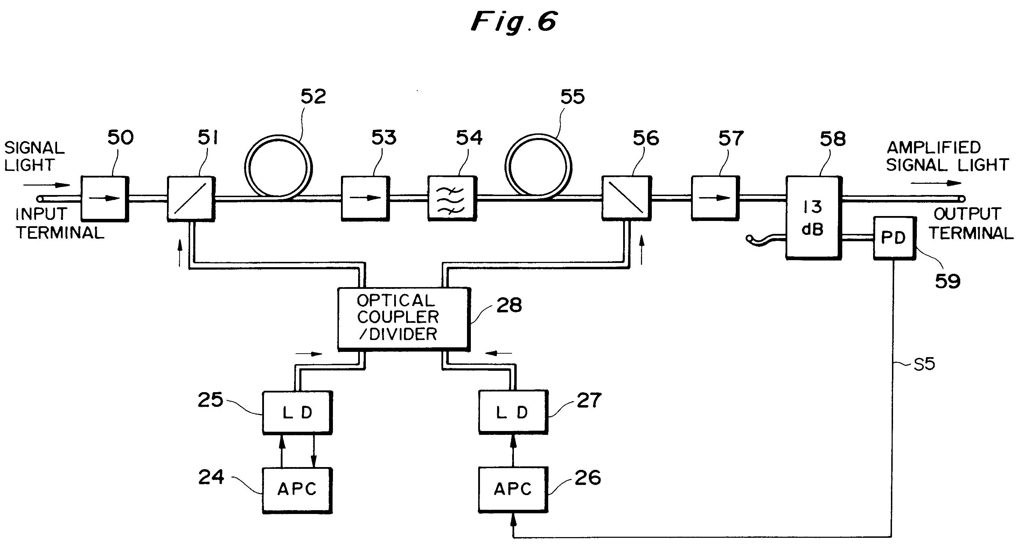

Next, a sixth embodiment of this invention will be explained with reference to FIG. 6. In FIG. 6 members which are common with FIG. 5 and are counterparts of FIG. 5 are represented by the same reference numerals as in FIG. 5.

Structural differences of the sixth embodiment from the fifth embodiment will be mainly explained for the description of the sixth embodiment. In FIG. 6, there is inserted an optical directional coupler 58 between the output terminal of a third optical isolator 57 and the output terminal of an optical fiber for amplified signal light to be outputted from. The third optical directional coupler 58 branches to photoelectric means 59, such as a photodiode or others, signal light (amplified signal light) propagated from the third optical isolator 57 to the output terminal of the optical fiber, and the photoelectric means 59 photoelectrically converts the branched amplified signal light into a photoelectric signal S5 and supplies the same to an APC unit 26.

As in the fifth embodiment, an APC unit 24 detects a part of pumping light of a first light source for optical pumping 25 and performs feedback-control so that the pumping light has a constant intensity.

On the other hand, the APC unit 26 receives the photoelectric signal S5 from the photoelectric means 59 through a monitor circuit built therein, and a control circuit built therein performs feedback-control an intensity of the pumping light so that the photoelectric signal S5 always has a constant level (voltage level or current level).

Thus, according to this embodiment, the first light source 25 is feedback-controlled so that an intensity of its pumping light is always maintained constant, and on the other hand an intensity of the second light source 27 is feedback-controlled so that an intensity of the signal light (amplified signal light) transmitted to the output terminal is maintained constant.

Accordingly, in this embodiment as well, because the forward pumping light and the backward pumping light to be incident on the first and the second amplification optical fibers 52, 55 from an optical coupler/divider 28 are maintained constant, amplifying ratios of the first and the second amplification optical fibers 52, 55 are retained constant, and an intensity of the signal light outputted from the output terminal can be always retained constant.

Because the light sources 25, 27 are feedback-controlled independently of each other by the respective APC units 24, 26, loads are not concentrated on one of the light sources, and a good redundancy can be realized.

Because the first amplification optical fiber 52 is pumped by the forward pumping, and the second amplification optical fiber 55 is pumped by the backward pumping by the backward pumping light, this embodiment can use the advantages that signal light of a wide wavelength range is amplified with low noise figures, and the efficiency of the energy conversion from the pumping light to the signal light is high.

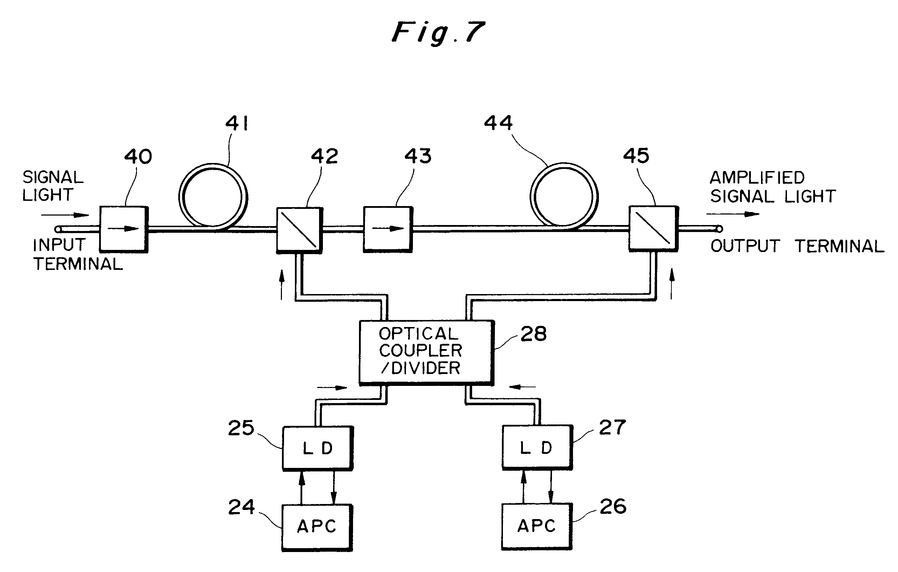

Next a seventh embodiment of this invention will be explained with reference to FIG. 7.

In FIG. 7 members which are common with FIG. 1 and are counterparts of FIG. 1 are represented by the same reference numerals as in FIG. 1.

In FIG. 7, there is provided an optical amplification passage including a first optical isolator 40, a first amplification optical fiber 41, a first optical coupler 42, a second optical isolator 43, a second amplification optical fiber 44, and a second optical coupler 45 inserted, in the stated order, in an optical fiber for signal light to be incident on the input terminal thereof. Signal light supplied to the input terminal of the optical fiber is amplified by the first and the second amplification optical fibers 41, 44 to be outputted from the output terminal of the optical fiber.

An APU unit 24 performs feedback-control so that pumping light of a 1.48 µm-wavelength from a first light source for optical pumping 25 is always constant. An APU unit 26 performs feedback-control so that pumping light of a 1.48 µm-wavelength from a second light source for optical pumping 27 is always constant. An optical coupler/divider 28 couples the pumping light from the light sources 25, 27 and divides the coupled pumping light into forward pumping light and backward pumping light, of equal intensities, and supplies the forward pumping light and the backward pumping light respectively to the first optical coupler 42 and to the second optical coupler 45.

The first and the second amplification optical fibers 41, 44 are optical fibers doped with a rare earth element and amplify signal light of 1.53 µm-wavelength by stimulated emission caused by the pumping light of a 1.48 µm-wavelength.

The first and the second optical couplers 42, 45 are provided by fused taper type fiber couplers or others, which couple light of different wavelengths for its wavelength-division multiplexing transmission. The first optical coupler 42 supplies the forward pumping light from the optical coupler 28 to the output terminal of the amplification optical fiber 42 while propagating the signal light amplified by the first amplification optical fiber 41 to the second optical isolator 43 and to the second amplification optical fiber 44. The second optical coupler 45 supplies the backward pumping light from the optical coupler/divider 28 to the output terminal of the amplification optical fiber 44 while propagating the signal light further amplified by the second amplification optical fiber 44 to the output terminal of the optical fiber.

The first optical isolator 40 removes reflected return light from the first amplification optical fiber 41 to the input terminal of the optical fiber, and the second optical isolator 43 removes noise light from the second amplification optical fiber 44 to the first optical coupler 42.

According to this embodiment of this structure, even when the pumping light from the light sources 25, 27 has different intensities from each other, the forward pumping light to be incident on the first amplification optical fiber 41, and the backward pumping light to be incident on the second amplification optical fiber 44 can have equal intensities, and in addition an intensity of a total of the forward and the backward pumping light is maintained constant. Accordingly amplifying ratios of the first and the second amplification optical fibers 41, 44 are maintained to be constant.

The signal light supplied to the input terminal of the optical fiber is amplified first by the first amplification optical fiber 41, and the amplified signal light is further amplified by the second optical fiber 44. Accordingly an optical fiber amplifier of high gains can be realized.

Furthermore, because the light sources 25, 27 are feedback-controlled independently of each other by the APC units 24, 26, loads are not concentrated on only one of the light sources, as done in the prior art, and a good redundancy can be realized.

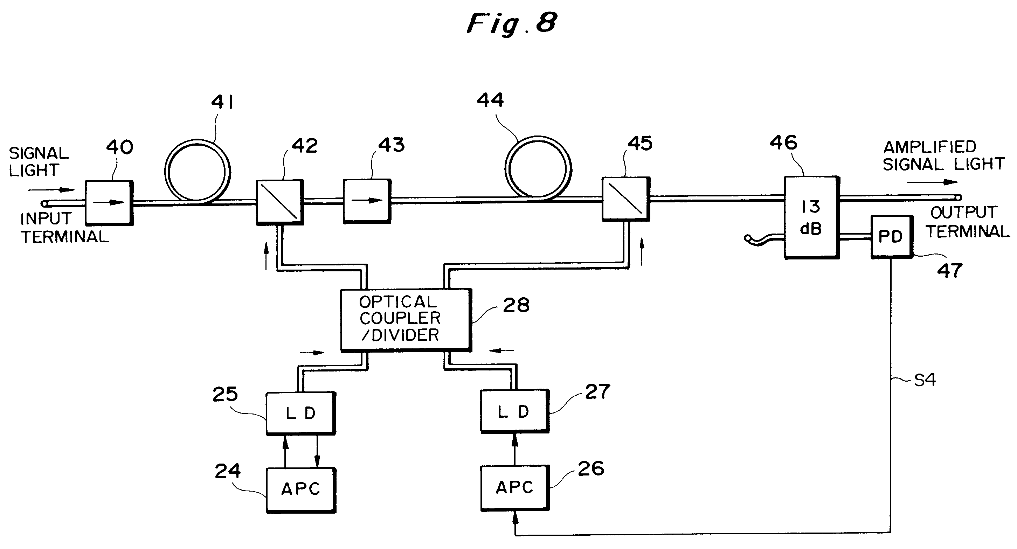

Next a eighth embodiment of this invention will be explained with reference to FIG. 8. In FIG. 8 members which are common with FIG. 7 and are counterparts of FIG. 7 are represented by the same reference numerals as in FIG. 7.

Structural differences of this embodiment from the seventh embodiment will be mainly explained for the description of this embodiment. In FIG. 8, an optical directional coupler 46 is inserted between the output terminal of a second optical coupler 45 and the output terminal of an optical fiber from which amplified signal light is outputted. The optical directional coupler 46 branches to photoelectric means 47, such as a photodiode or others, signal light (amplified signal light) which has propagated from the second optical coupler 45 to the output terminal of the optical fiber, and the photoelectric means 47 photoelectrically converts a branched part of the signal light to a photoelectric signal S4 and supplies the photoelectric signal S4 to an APC unit 26.

As does in the seventh embodiment, an APC unit 24 detects a part of pumping light of a first light source for optical pumping 25 and feedback-controls to maintain a constant intensity of the pumping light of the first light source 25.

On the other hand, the APC unit 26 receives the photoelectric signal S4 through a monitor circuit built therein, and the control circuit built therein feedback-controls an intensity of a second light source for optical pumping 27 so that a constant level (voltage level or current level) of the photoelectric signal S4 is retained.

According to this embodiment, the first light source 25 is feedback-controlled so that its pumping light always has a constant intensity, and on the other hand an intensity of the second light source 27 is feedback-controlled so that the amplified signal light transmitted to the output terminal has a constant intensity.

Accordingly because intensities of the forward pumping light to be incident on the amplification optical fiber 41 from the optical coupler/divider 28 through the first optical coupler 42 and of the backward pumping light to be incident on the second amplification optical fiber 44 from the optical coupler/divider 28 through the second optical coupler 45 are equal, amplifying ratios of the first and the second amplification optical fibers 41, 44 are always maintained constant. Consequently an intensity of the amplified signal light to be outputted from the output terminal is always retained constant. Because the light sources 25, 27 are feedback-controlled independently from each other by the APC units 24, 26, loads are not concentrated on one of the light sources, and a good redundancy can be realized.

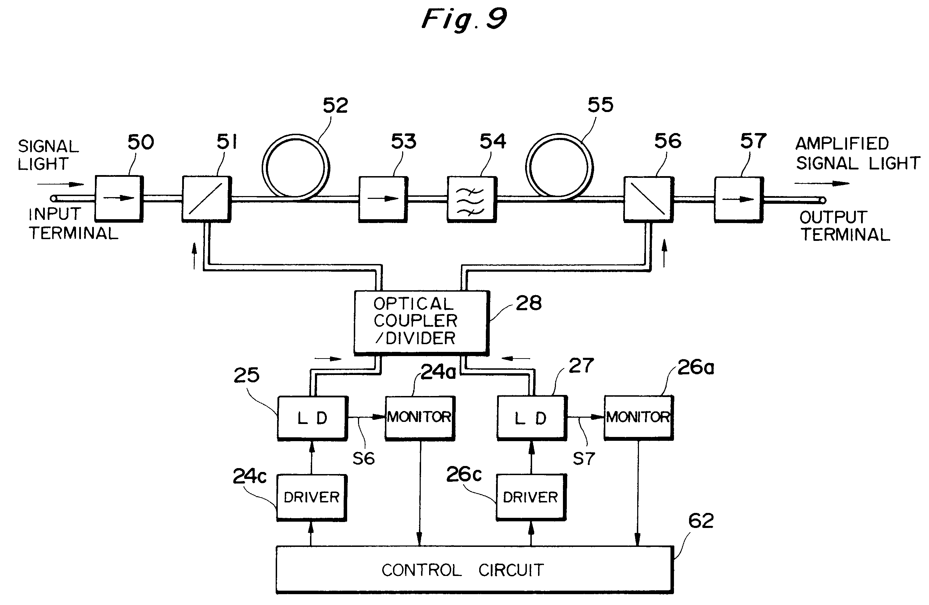

FIG. 9 is a block diagram of an nineth embodiment of this invention. In FIG. 9 members which are common with FIGs. 3 and 5 and counterparts of FIGs 3 and 5 are represented by the same reference numerals as in FIGs. 3 and 5.

In FIG. 9, there is provided an optical amplification passage including a first optical isolator 50, a first optical coupler 51, a first amplification optical fiber 52, a second optical isolator 53, band-pass filter 54, a second amplification optical fiber 55, a second optical coupler 56 and a third optical isolator 57 inserted, in the stated order, in an optical fiber for signal light to be incident on the input terminal thereof. Signal light amplified by the first and the second amplification optical fibers 52, 55 is outputted from the output terminal of the optical fiber.

An optical coupler/divider 28 couples pumping light from both a first light source 25 for optical pumping and a second light source for optical pumping 27, and divides the coupled pumping light into forward pumping light and backward pumping light, of equal intensities. The forward pumping light is supplied to the first optical coupler 51, and the backward pumping light is supplied to the second optical coupler 56.

The operation of this embodiment will be explained.

A control circuit 62 performs automatic control for always maintaining constant an intensity I₀ of a total of the pumping light of both the light sources 25, 27. As initialization satisfying this set condition, the control circuit 62 can select a first initialization in which normally only one of the light sources 25, 27 is in operation, the other light source being out of operation, or a second initialization in which normally both the light sources 25, 27 are in operation.

As the first initialization, the case that the light source 25 is in operation, and the light source 27 is out of operation, and the pumping light of the light source 25 is incident on the optical coupler/divider 28.

The pumping light of a set intensity I₀ is divided into forward pumping light and backward pumping light, of equal intensities I₀/2. The forward pumping light is supplied to the first amplification optical fiber 52 through the first optical coupler 51, and the backward pumping light is supplied to the second amplification optical fiber through the second amplification optical fiber 55.

A control circuit 62 performs automatic control, as described above, for maintaining an intensity of the pumping light of the light source 25 constant. When a change of the detected signal S6 is within an allowable range, the control circuit 62 controls a drive circuit 24c to increase or decrease a supply power to the light source 25, whereby an intensity of the pumping light is maintained constant.

When an intensity of the pumping light of the light source 25 greatly lowers to fail to satisfy the set condition, the control circuit 62 detects this deviating state, based on the detected signal S6 and control the drive circuit 24c to stop the power supply to the light source 25, concurrently on the other band to start the power supply to the light source 27. Hereafter the same control on the light source 25 is performed on the light source 27.

Thus, even when the light source malfunctions due to deterioration or other causes, the first and the second amplification optical fibers 52, 55 are continuously pumped stably by the forward and the backward pumping light of the pumping light of the light source 27 the malfunctioning light source 25 has been switched to. Accordingly a constant amplifying ratio can be always retained. The switching operation from the light source 25 to the light source 27 is quick, and instantaneous interruptions accompanying the use of the conventional optical switches do not occur.

Then, as the second initialization, the case that normally both the light sources 25, 27 are in operation, and the pumping light of both the light sources is incident on the optical coupler/divider 28 will be explained.

In this case, intensities of the pumping light of both the light sources are set I₀/2 so that intensities of the forward and the backward pumping light to be incident on the first and the second amplification optical fibers 52, 55 are constant.

The pumping light from the light sources 25, 27 are coupled by the optical coupler/divider 28 and divided into the forward and the backward pumping light, of equal intensities of I₀/2. The forward pumping light is supplied to the first amplification optical fiber 52 through the optical coupler 51, and the backward pumping light is supplied to the amplification optical fiber 55 through the optical coupler 56. Consequently the rare earth element of the first and the second amplification optical fibers 52, 55 are excited by the pumping light of an I₀/2 intensity, and signal light is amplified.

Then the control circuit 62 performs the automatic control, as described above, for maintaining intensities of the pumping light of both light sources 25, 27. When changes of detected signals S6, S7 are within an allowable range, the control circuit 62 separately controls respective drive circuits 24a, 26c to instantaneously increase or decrease supply powers to the respective light sources 25, 27, whereby intensities of the pumping light can be maintained constant.

For example, when an intensity of the pumping light of one of the light sources lowers to fail to satisfy the set condition, the control circuit 62 detects this deviating state, based on the detected signal S6, and causes the drive circuit 26c to increase a power supply to the other light source 27, whereby an intensity I₀ of a total of the pumping light of both light sources 25, 27 is maintained constant. Hereafter, the control circuit 62 performs the automatic control for maintaining an intensity of a total of the pumping light of both light sources at the set intensity I₀ even when there is a difference in intensity between the pumping light of the light source 25 deviating from the set condition and the pumping light of the normally operating light source 27.

Thus, according to this embodiment, intensities of the forward and the backward pumping light to be incident on the first and the second amplification optical fibers 52, 55 are always maintained constant. Accordingly amplifying ratios of the first and the second amplification optical fibers are retained constant, and an optical fiber amplifier of high precision can be realized. The automatic control is performed for always maintaining constant intensities of the pumping light to be incident on the first and the second amplification optical fibers 52, 55 even when one of the light sources 25, 27 is deteriorated. Accordingly a good redundancy can be realized.

Furthermore, the first and the second amplification optical fibers 52, 55 can provide high gains.

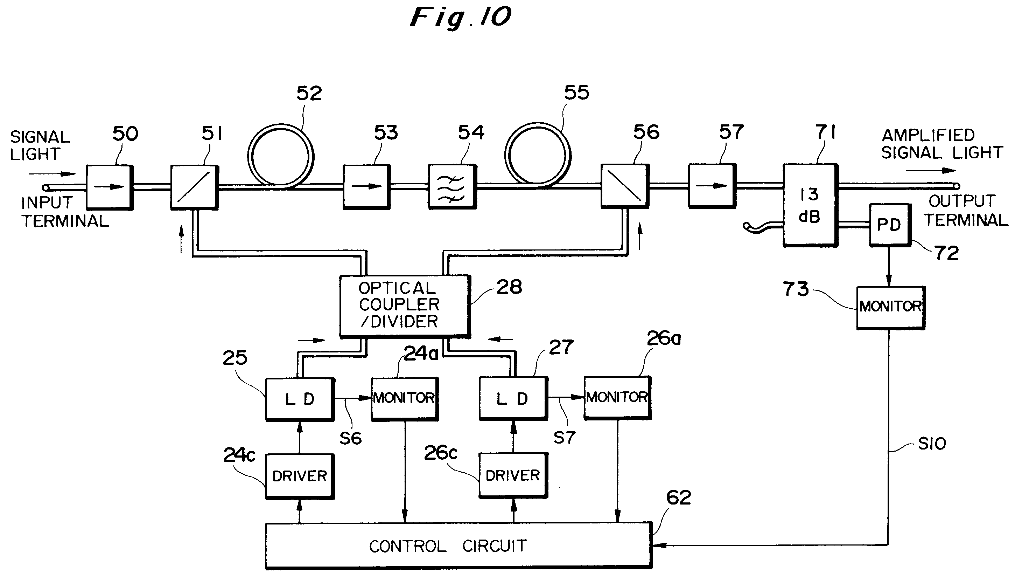

Then a tenth embodiment of this invention will be explained with reference to FIG. 10. In FIG. 10 members which are common with FIG. 9 and are counterparts of FIG. 9 are represented by the same reference numerals as in FIG. 9.

Structural differences of the tenth embodiment from the nineth embodiment will be mainly explained for the description of the tenth embodiment. In FIG. 10, an optical directional coupler 71 is inserted between the output terminal of a third optical isolator 57 and the output terminal of an optical fiber. This optical directional coupler 71 branches signal light (amplified signal light) propagating from the second optical coupler 55 to the output terminal of the optical fiber to photoelectric means 72, such as a photodiode or others. The photoelectric means 72 photoelectrically converts the branched amplified signal light into a photoelectric signal S10 and incessantly supplies the photoelectric signals S10 to a monitor circuit 73. The monitor circuit 73 amplifies the photoelectric signal S10 and supplies the amplified photoelectric signal to a control circuit 62. That is, the control circuit 62 in fed back with the detected signal S6 indicative of an intensity of the pumping light of a first light source for optical pumping 25, a detected signal S7 indicative of an intensity of the pumping light of a second light source for optical pumping 27, and the photoelectric signal S10 indicative of an intensity of the amplified signal light to be outputted to the output terminal of the optical fiber.

The operation of this embodiment will be explained.

In this embodiment; the control circuit 62 performs automatic control for always maintaining an intensity I₀ of a total of the pumping light of both light sources 25, 27. As initialization conditions satisfying this set condition, the control circuit 62 select a first initialization in which normally one of the light sources 25, 27 is in operation, the other light source being out of operation, or a second initialization in which normally both light sources 25, 27 are in operation.

As the first initialization, the light source 25 is in operation, the light source 27 being out of operation, and the pumping light of only the light source 25 is incident on the optical coupler/divider 28.

The pumping light of a set intensity I₀ is divided into forward pumping light and backward pumping light, of equal intensities of I₀/2. The forward pumping light is supplied to the first amplification optical fiber 52 through the first optical coupler 51, and the backward pumping light is supplied to the second amplification optical fiber 55 through the second optical coupler 56.

Then the control circuit 62 incessantly detects an intensity of the pumping light of the light source 25, based on the detected signal S6 while detecting an intensity of the amplified signal light, based on the photoelectric signal S10. The control circuit 62 causes the drive circuit 24c to control a supply power to the light source 25 so that multiplexing deflections of the signal S6, S10 are prohibited. Thus an intensity of the pumping light of the light source 25 is maintained constant.

When an intensity of the pumping light of the light source 25 greatly lowers to fail to satisfy the set condition, the control circuit 62 detects this deviating state, based on the detected signal S6, and controls the drive circuit 24c to stop the power supply to the light source 25, and concurrently on the other hand the drive circuit 26c to start the power supply to the light source 27. Hereafter the same automatic control as ont the light source 25 is performed on the light source 27.

That is, after the switching to the light source 27, the control circuit 62 incessantly detects an intensity of the pumping light of the light source 27, based on the detected signal S7 while incessantly detecting an intensity of the amplified signal light, based on the photoelectric signal S10, and causes the drive circuit 26c to control a supply power to the light source 27 so that multiplexing deflections of the signals S7, S10 are prohibited. Accordingly an intensity of the pumping light of the light source 27 is maintained constant.

Thus, when the light source 25 is in operation, both the first and the second amplification optical fibers 52, 55 are continuously excited stably by the forward and the backward pumping light of the light source 25. Accordingly their amplifying ratios can be maintained constant. Even when the light source 25 malfunctions due to deterioration, the first and the second amplification optical fibers 52, 55 are continuously pumped stably by the forward and the backward pumping light of the light source 27 the malfunctioning lights source has been switched to. Furthermore, an intensity of the amplified signal light can be retained constant.

The switching operation from the light source 25 to the light source 27 is quick. Instantaneous interruptions accompanying the use of the conventional optical switches do not occur.

Then as the second initialization, the case that normally both the light sources 25 and the light sources 27 are in operation, and the pumping light of both the light sources is incident on the optical coupler/divider 28 will be explained.

In this case, intensities of the pumping light of both the light sources 25, 27 are set at I₀/2 so that an intensity of a total of the pumping light to be incident on the first and the second amplification optical fibers 52, 55 is I₀.

The pumping light of both light sources 25, 27 is coupled by the optical coupler/divider 28 and divided into forward pumping light and backward pumping light, of equal intensities of I₀/2. The forward pumping light is incident on the first amplification optical fiber 52 through the first optical coupler 51, and the backward pumping light is incident on the second amplification optical fiber 55 through the second optical coupler 56.

The control circuit 62 causes the drive circuit 24a to control a supply power to the light source 25 so that multiplexing deflections of the detected signal S7 from the monitor circuit 24c and the photoelectric signal S10 are prohibited, and concurrently on the other hand causes the drive circuit 26c to control a supply power to the light source 27 so that multiplexing deflections of the detected signal from the monitor circuit 26c and the photoelectric signal S10 are prohibited. Thus, an intensity I₀ of a total of the pumping light of both light sources 25, 27 is maintained constant. Consequently amplifying ratios of the first and the second amplification optical fibers are stabilized constant, and an intensity of the amplified signal light is maintained constant.

For example, when an intensity of the pumping light of only one 25 of the light sources greatly lowers to fail to satisfy the set condition, the control circuit detects this deviating state, based on the detected signal S6 and controls the drive circuit 26c to increase a supply power to the other light source 27, so that an intensity of a total of the pumping light of both light sources 25, 27 is I₀. Hereafter with respect to the light source 25 deviating from the set condition, the control circuit 62 causes the drive circuit 24c to control a supply power to the light source 25 so that multiplexing deflections of the detected signal S6 from the monitor circuit 24a and the photoelectric signal S10 from the monitor circuit are prohibited, while causing the drive circuit 26c to control a supply power to the light source 27 so that multiplexing deflections of the detected signal S7 from the monitor circuit 26a and the photoelectric signal S10 are prohibited. Even when there is a difference in intensity between the pumping light of both light sources 25, 27, an intensity I₀ of a total of the pumping light of the light sources is maintained constant. Consequently amplifying ratios of the first and the second amplification optical fibers 52, 55 are stabilized constant, and an intensity of the amplified signal light to be outputted from the output terminal is retained constant.

Thus, according to this invention, intensities of the forward and the backward pumping light to be incident on the first and the second amplification optical fibers 52, 55 are maintained constant. Accordingly amplifying ratios of the first and the second amplification optical fibers 52, 55 are stabilized constant, and an optical fiber amplifier of high precision can be realized. The automatic control is performed for always maintaining the pumping light to be incident on the first and the second amplification optical fibers 52, 55 constant even when one of the light sources 25, 27 is deteriorated. Accordingly a good redundancy is realized. Furthermore, the first and the second amplification optical fibers can pride high gains.

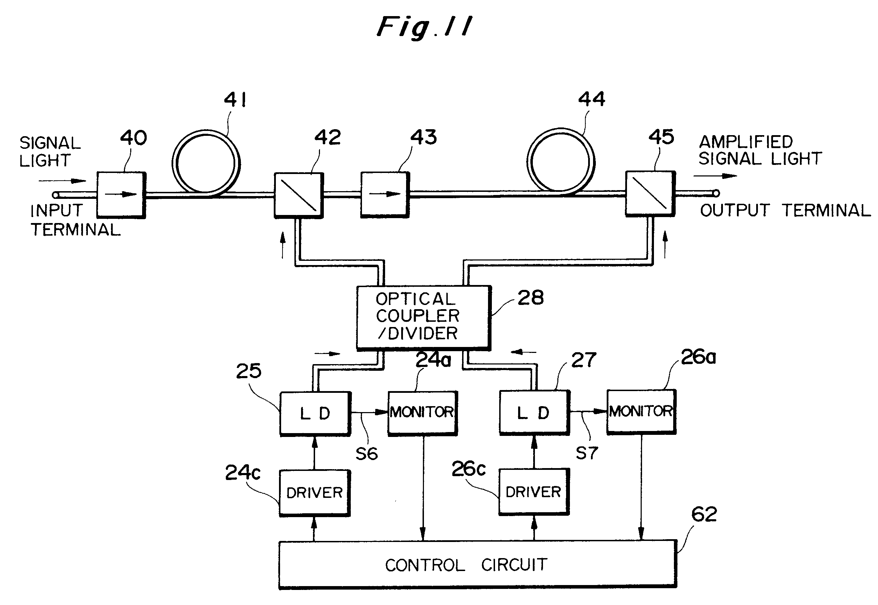

FIG. 11 is a block diagram of a eleventh embodiment of this invention. In FIG. 11 members which are common with FIGs. 3 and 7 and are counterparts of FIGs. 3 and 7 are represented by the same reference numerals as in FIGs. 3 and 7.

In FIG. 11, there is provided an optical amplification passage including a first optical isolator 40, a first amplification optical fiber 41, a first optical coupler 42, a second optical isolator 43, a second amplification optical fiber 44, and a second optical coupler 45 inserted, in the stated order, in an optical fiber for signal light to be incident ont he input terminal thereof. Signal light amplified by the first and the second amplification optical fibers 41, 44 is outputted from the output terminal of the optical fiber.

The optical coupler/divider 28 couples pumping light from a first and a second light sources for optical pumping and divides the coupled pumping light into forward pumping light and backward pumping light. The forward pumping light is supplied to the first optical coupler 42, and the backward pumping light is supplied to the second optical coupler 45.

Each of the first and the second light sources 25, 27 incorporates a photoelectric device, such as a photodiode or others, for photoelectrically converting a part of the pumping light and detect an intensity of the pumping light. Normally photoelectric signals S6, S7 are incessantly supplied to a control circuit 10 through a monitor circuit 24a, 26a.

The control circuit 62 incessantly detects changes of the photoelectric signals S6, S7 by, e.g., program processing by a microcomputer, and automatically controls drive circuits 24c, 26c to adjust powers to the first and the second light sources 25, 27 so that a total of the photoelectric signals S6, S7 is always maintained constant. That is, the control circuit 62 automatically feedback-controls supply powers to the first and the second light sources 25, 27, based on the photoelectric signals S6, S7 so that an intensity of a total of the pumping light of the first and the second light sources 25, 27 is always maintained constant.

The operation of this embodiment will be explained.

As described above, the control circuit 62 performs automatic control for always maintaining constant an intensity I₀ of a total of the pumping light of the light sources 25, 27. As initialization conditions satisfying this condition, the control circuit 62 selects a first initialization in which normally one of the light sources 25, 27 is in operation, and the other is out of operation, or a second initialization in which normally both light sources 25, 27 are in operation.

As the first initialization, the case in which the light source 25 is operated, the light source 27 being stopped, so that the pumping light of only the light source 25 is incident on the optical coupler/divider 28.

The pumping light of a set intensity I₀ is divided by the optical coupler/divider 28 into forward pumping light and backward pumping light, of equal intensities of I₀/2. The forward pumping light is supplied to the first amplification optical fiber 41 through the first optical coupler 42, and the backward pumping light is supplied to the second amplification optical fiber 44 through the second optical coupler 45.

The control circuit 62 automatically controls, as described above, an intensity of the pumping light of the light source 25, and instantaneously increases or decreases a supply power from the drive circuit 24c to the pumping light 25 when a change of the detected signal S6 is within an allowable range, whereby an intensity of the light source is maintained constant.

When an intensity of the pumping light of the light source 25 greatly lowers or rises to fail to satisfy the set condition, the control circuit 62 detects this deviating state, based on the detected signal S6, and controls the drive circuit 24c to stop the power supply to the light source 25 and concurrently on the other hand to start the power supply to the light source 27. Hereafter the same control as on the light source 25 is performed on the light source 27.

Thus, even when the light source 25 malfunctions due to deterioration or other causes, the first and the second amplification optical fibers 41, 44 are continuously pumped stably by the forward and the backward pumping light from the light source to which the light source 25 has been switched. Accordingly an amplifying ratio can be maintained constant. The switching operation from the light source 25 to the light source 27 is quick, and accordingly instantaneous interruptions caused by the conventional optical switches do not occur.

Next, as the second initialization, the case in which normally the light sources 25, 27 are set in operation, and the pumping light of both the light sources is incident on the optical coupler/divider 28 will be explained.

In this case, intensities of the pumping light of both light sources 25, 27 are set at I₀/2 so that the forward and the backward pumping light to be incident on the first and the second amplification optical fibers 41, 44 are constant.

The pumping light of the light sources 25, 27 are coupled by the optical coupler/divider 28 and divided into the forward and the backward pumping light, of equal intensities of I₀/2. The forward pumping light is supplied to the first amplification optical fiber 41 through the optical couplet 42, and the backward pumping light is supplied to the second amplification optical fiber through the optical coupler 42. Consequently the rare earth element of the first and the second amplification optical fibers 41, 44 are excited by the respective pumping light of I₀/2-intensity to amplify signal light.

Then the control circuit 62 automatically controls, as described above, intensities of the pumping light of the light sources 25, 27, so that when changes of the detected signals S6, S7 are within an allowable range, instantaneously the drive circuits 24c, 26c separately increases or decreases supply powers to the respective light sources 25, 27, whereby intensities of the pumping light are maintained constant.

For example, an intensity of the pumping light of one of the light sources greatly lowers to fail to satisfy the set condition, the control circuit 62 detects this deviating state, based on the detected signal S6, and controls the drive circuit 26c to increase a supply power to the other light source 27, whereby an intensity of a total of the pumping light of both light sources 25, 27 is maintained at I₀. Hereafter the control circuit 62 performs the automatic control for maintaining an intensity of a total of both pumping light at a set intensity I₀ even when there is a difference between an intensity of the pumping light of the malfunctioning light source 25 and that of the pumping light of the normally operating light source 27.

Thus, according to this embodiment, intensities of the forward and the backward pumping light to be incident on the first and the second amplification optical fibers 41, 44 are always maintained constant. Accordingly the amplifying ratio of the first and the second amplification optical fibers are stabilized constant, and an optical fiber amplifier of high precision can be realized. The automatic control is performed so that even when one of the light sources 25, 27 is deteriorated, intensities of the pumping light to be incident on the first and the second amplification optical fibers 41, 44 are always maintained constant. Accordingly a good redundancy can be realized.

Furthermore, the first and the second amplification optical fibers 41, 44 can provide good gains.

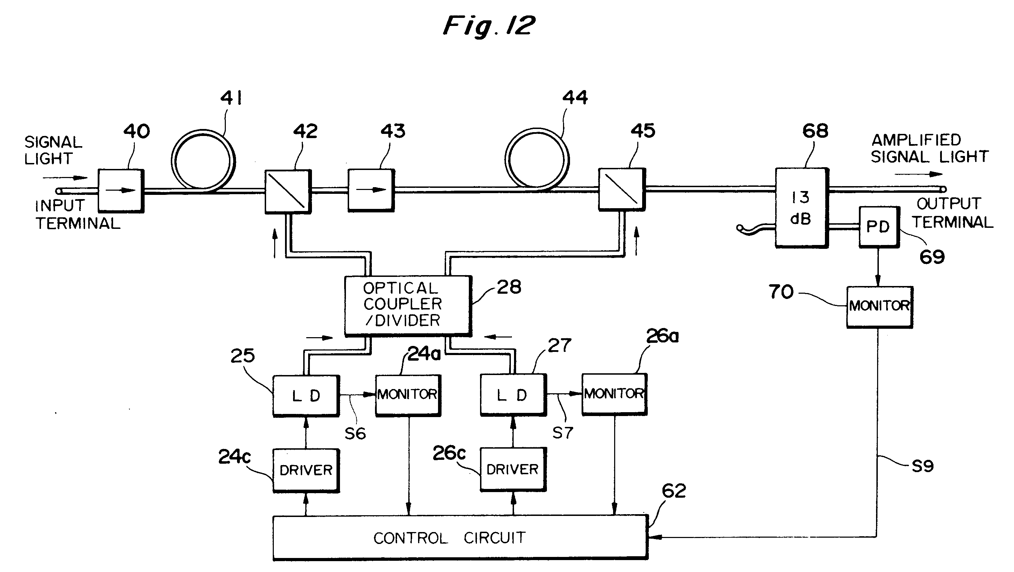

FIG. 12 is a block diagram of a twelfth embodiment of this invention. In FIG. 12 members which are common with FIG. 11 and are counterparts of FIG. 11 are represented by the same reference numerals as in FIG. 11.

Structural differences of this embodiment from that of FIG. 11 will be mainly explained for the explanation of this embodiment. In FIG. 12 an optical directional coupler 68 is inserted between the output terminal of a second optical coupler 45 and the output terminal of an optical fiber. The optical directional coupler 68 branches amplified signal light propagating from the second optical coupler 68 to the output terminal of the optical fiber, to photoelectric means 69, such as a photodiode or others. The photoelectric means 69 photoelectrically converts the branched amplified signal light into the photoelectric signal S9, and incessantly supplies the photoelectric signal S9 to a monitor circuit 70. The monitor circuit 70 amplifies the photoelectric signal S9 to supply the amplified signal S9 to a control circuit 62. That is, the control circuit 62 is fed back with the detected signal S6 indicative of an intensity of the pumping light of a first light source 25, the detected signal S7 indicative of an intensity of the pumping light of a second light source 27, and the photoelectric signal S9 indicative of an intensity of the amplified signal light to be supplied to the output terminal of an optical fiber.

Next, the operation of this embodiment will be explained.

As described above, the control circuit 62 performs automatic control for always maintaining constant an intensity I₀ of a total of the pumping light of both light sources 25, 27. As initialization conditions satisfying this condition, the control circuit 62 selects a first initialization in which normally one of the light sources 25, 27 is in operation, and the other is out of operation, or a second initialization in which normally both light sources 25, 27 are in operation.

As the first initialization, the case in which the light source 25 is operated, the light source 27 being stopped, so that the pumping light of only the light source 25 is incident on the optical coupler/divider 28.

The pumping light of a set intensity I₀ is divided into the forward pumping light and the backward pumping light, of equal intensities I₀/2. The forward pumping light is supplied to the first amplification optical fiber 41 through the first optical coupler 42, and the backward pumping light is supplied to the second amplification optical fiber 44 through the second optical coupler 45.

The control circuit 62 incessantly detects intensities of the pumping light of the light source 25 while incessantly detecting intensities of the amplified signal light, based on the photoelectric signal S9, and causes the drive circuit 24c to control a supply power to the light source 25 so that multiplying deflections of the signals S6, S9 are prohibited. Thus, an intensity of the pumping light of the light source 25 is retained constant.

When an intensity of the pumping light of the light source 25 greatly lowers to fail to satisfy the set condition, the control circuit 62 detects this deviating state, based on the detected signal S6 and controls the drive circuit 24c to stop the power supply to the light source 25 and concurrently on the other band start the power supply to the light source 27. Hereafter the same control as on the light source 25 is performed on the light source 27.

That is, following the switching operation to the light source 27, the control circuit 62 incessantly detects intensities of the pumping light of the light source 27, based on the detected signal S7 while incessantly detecting intensities of the amplified signal light, based on the photoelectric signal S9, and causes the drive circuit 26c to control a supply power to the light source 27 so that multiplexing deflections of the signals S7, S9 are prohibited. Thus, an intensity of the pumping light of the light source 27 can be retained constant.

Accordingly when the light source 25 is in its pumping operation, both the first and the second amplification optical fibers 41, 44 are continuously pumped stably by the forward and the backward pumping light of the pumping light of the light source 25, and amplifying ratios of the first and the second amplification optical fibers are maintained constant. Even when the light source 25 malfunctions due to deterioration or other causes, the first and the second amplification optical fibers are continuously amplified stably by the forward and the backward pumping light of the pumping light of the light source 27 the malfunctioning light source 25 has been switched to. Accordingly amplifying ratios of the first and the second amplification optical fibers can be retained constant. Furthermore, an intensity of the signal light (amplified signal light) outputted from the output terminal of the optical fiber is maintained constant.

The switching operation from the light source 25 to the light source 27 is quick, and instantaneous interruptions accompanying the use of optical switches do not take place.

Next, as the second initialization, the case that normally both the light sources 25, 27 are in operation to supply the pumping light of both the light sources to the optical coupler/divider 28 will be explained.

In this case, intensities of the pumping light of both the light sources 25, 27 are set I₀/2 so that an intensity I₀ of a total of the pumping light to be incident on the first and the second amplification optical fibers 41, 44 is I₀.

The pumping light of the light sources 25, 27 are coupled by the optical coupler/divider 28 and divided into forward pumping light and backward pumping light, of equal intensities of I₀/2. The forward pumping light is supplied to the first amplification optical fiber 41 through the optical coupler 42, and the backward pumping light is supplied to the second amplification optical fiber 44 through the optical coupler 45.

Then the control circuit 62 causes the drive circuit 24c to control a supply power to the light source 25 so that multiplexing deflections of the detected signal S6 from the monitor circuit 24a and the photoelectric signal S9 are prohibited, while causing the drive circuit 24c to control a supply power to the light source 27 so that multiplexing deflections of the detected signal S7 and the photoelectric signal S9 are prohibited. Consequently an intensity I₀ of a total of the pumping light of the light source 25, 27 is maintained constant. Accordingly amplifying ratios of the amplification optical fibers 41, 44 are stabilized constant, and an intensity of the amplified signal light to be outputted from the output terminal can be retained constant.

For example, when an intensity of only one 25 of the light sources greatly lowers to fail to satisfy the set condition, the control circuit 62 detects this deviating state, based on the detected signal S6, and controls the drive circuit 26c to increase a supply power to the other light source 27 so as to me an intensity of a total of the pumping light of the light sources 25, 27 is I₀. Hereafter, with respect to the light source which deviates from the set condition, the control circuit 62 causes the drive circuit 24c to control a supply power to the light source 25 so that multiplexing deflections of the detected signal S6 from the monitor circuit 24a and the photoelectric signal S9 are prohibited while causing the drive circuit 26c to control a supply power to the light source 27 so that multiplexing deflections of the detected signal S7 from the monitor circuit 26a and the photoelectric signal S9 are prohibited. Thus, even when there is a difference between the pumping light of the light sources 25, 27, an intensity of a total of the pumping light of the light sources is maintained constant. Consequently amplifying ratios of the first and the second amplification optical fibers 41, 44 are stabilized constant, and an intensity of the amplified signal light can be retained constant.

Thus, according to this embodiment, the forward and the backward pumping light to be incident on the first and the second amplification optical fibers 41, 44 can be always maintained constant. Accordingly amplifying ratios of the first and the second amplification optical fibers can be stabilized constant, and an optical fiber amplifier of high precision can be realized. The automatic control is performed for always maintaining constant the pumping light to be incident on the first and the second optical fibers 41, 44 even when one of the light sources 25, 27 is deteriorated. Accordingly a good redundancy is realized. Furthermore the first and the second amplification optical fibers 41, 44 can provide high gains.

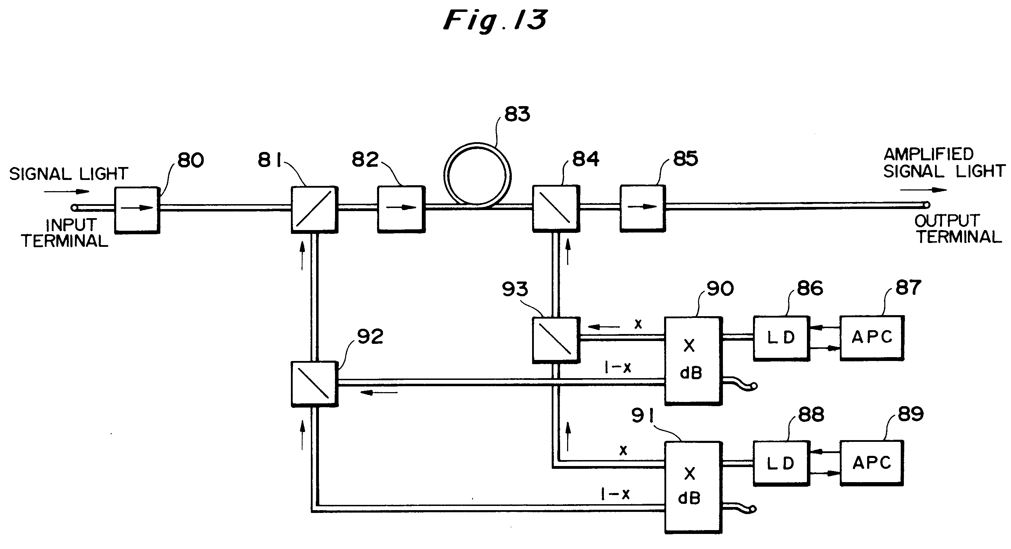

A thirteenth embodiment of this invention will be explained with reference to FIG. 13. In FIG. 13 there is provided an optical amplification passage including a first optical isolator 80, a first optical coupler 81, a second optical isolator 82, an amplification optical fiber 83, a second optical coupler 84, and a third optical isolator 85 inserted, in the stated order, in an optical fiber for signal light to be incident on the input terminal thereof. The signal light amplified by the amplification optical fiber is outputted from the output terminal of the optical fiber. The amplification optical fiber 83 is an Er-doped quartz fiber for amplifying signal light of a 1.48 µm-wavelength. The first to the third optical isolators 80, 82, 85 are polarized wave-independent optical isolators for removing reflected return light.

The light source 86 is controlled by the APC unit 87 so as to emit pumping light of a certain intensity. The second light source 88 is controlled by the APU unit 89 to emit pumping light of a certain intensity. That is, the APC units 87, 89 detect intensities of the light sources 86, 88 one after another and automatically control supply powers so as to prevent changes of the intensities.

The pumping light from the first light source 86 is divided by a first optical directional coupler 90 into parts by a set ratio x : (1-x) corresponding to an attenuation amount X (dB). The pumping light from the second light source 88 is divided by a second optical directional coupler 91 into parts by a set ratio x : (1-x) corresponding to an attenuation amount X (dB). Each of the first and the second optical directional couplers 90, 91 is formed of a pair of fused drawn optical fibers, and divides the pumping light supplied to the input terminal by the above-mentioned ratio and outputs the divided pumping light from the two output terminals.

A third optical coupler 92 couples one divided pumping light (pumping light on the side of 1-x) of the first and the second optical directional couplers 90, 91 to supply the coupled pumping light to the first optical coupler 81 as forward pumping light. A fourth optical coupler 93 couples the other divided pumping light (pumping light on the side of x) of the first and the second optical directional couplers 90, 91 and supplies the coupled pumping light to the second optical coupler 84 as backward pumping light.

Next the operation of the embodiment having this structure will be explained. The first optical coupler 81 couples signal light supplied through the first optical isolator 80 and the forward pumping light from the third optical coupler 92 and supplies the coupled light to the input terminal of the amplification optical fiber 83. On the other hand, the second optical coupler 84 supplies the backward pumping light from the fourth optical coupler 93 to the output terminal of the amplification optical fiber 83 while supplying the signal light amplified by the amplification optical fiber 83 to the third optical isolator 85.

Thus, according to this embodiment, the amplification optical fiber 83 to pumped by the forward pumping light and the backward pumping light to amplify the signal light. Because the APC units 87, 89 maintain intensities of the pumping light from the first and the second light sources 86, 88, an intensity of a total of the forward and the backward pumping light is constant. Accordingly an amplifying ratio of the amplification optical fiber 83 is maintained constant. Furthermore, advantages of the two-way pumping can be exerted. In addition, because the first and the second light sources 86, 88 are independently controlled by the respective APC units 87, 89, even when one of the light sources malfunctions, the other light source continues its operation. Consequently decisive accidents or others can be prevented, and a good redundancy can be provided.

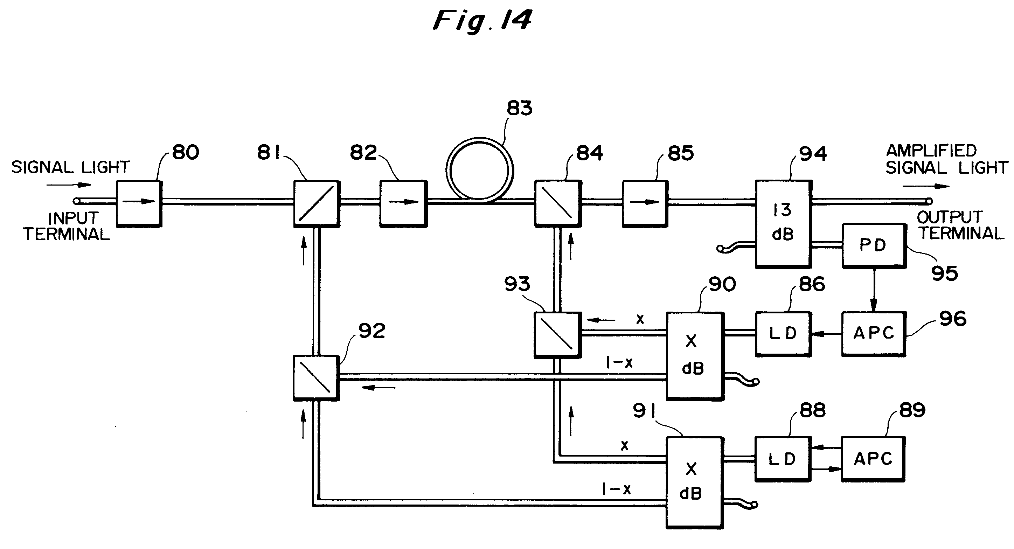

Then a fourteenth embodiment of this invention will be explained with reference to FIG. 14. In FIG. 14 members which are common with FIG. 13 and counterparts of FIG. 13 are represented by the same reference numerals as in FIG. 13. Structural difference of this embodiment from the second embodiment will be explained for the explanation of this embodiment. In FIG. 14 an optical directional coupler 94 is inserted between the output terminal of a third optical isolator 85 and the output terminal of an optical fiber and branches amplified signal light to a photoelectric device 95. The photoelectric device 95 photoelectrically converts the branched amplified signal light into a photoelectric signal and supplies the photoelectric signal to the APC unit 96. The APC unit 96 controls a supply power to the light source 86 so as to prevent changes of the photoelectric signal.

Accordingly, according to this embodiment, a amplifying ratio of the amplification optical fiber 83 is maintained constant, and an intensity of the amplified signal light is retained constant. Furthermore, the light sources 86, 88 are independently controlled by the respective APC units 89, 88, and a good redundancy can be realized.

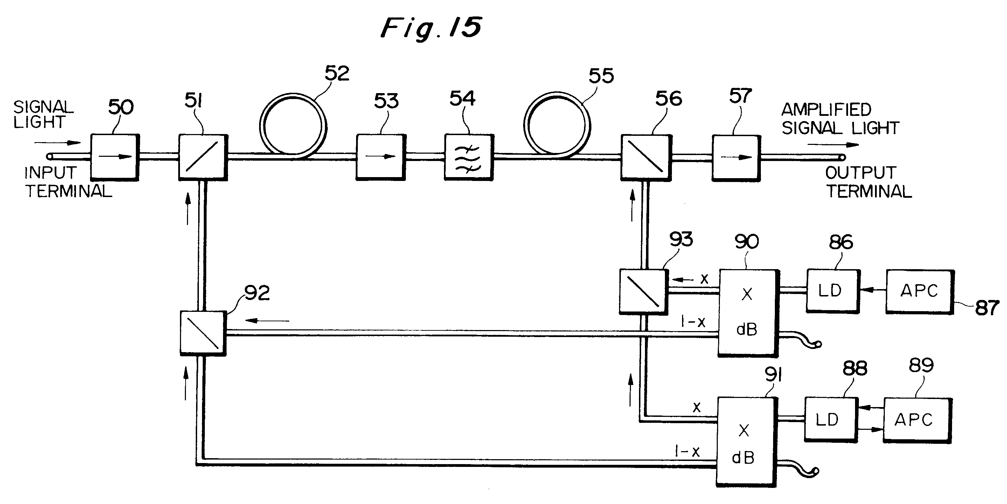

Next, a fifteenth embodiment of this invention will be explained with reference to FIG. 15. In FIG. 15 members which are common with FIGs. 9 and 13 and counterparts of FIGs. 9 and 13 are represented by the same reference numerals as in FIGs. 9 and 13.

Structural characteristics of this embodiment will be mainly explained for the explanation of this embodiment. As shown, a first amplification optical fiber 52 and a second amplification optical fiber 55 inserted between a first optical coupler 51 and a second optical coupler 56 are supplied respectively with forward pumping light from a third optical coupler 92 and backward pumping light from a fourth optical coupler 93. That is, the pumping light from the first and the second light sources for optical pumping 86, 88 is branched by optical directional couplers 90, 91, and a third and a fourth optical couplers 92, 93 couple the branched pumping light, whereby the forward pumping light and the backward pumping light are formed. The forward pumping light is supplied to the first amplification optical fiber 52 through the first optical coupler 51, and the backward pumping light is supplied to the second amplification optical fiber 55 through the second optical coupler 56.

Thus, according to this embodiment, intensities of the pumping light of the light sources 86, 88 are independently controlled to be constant by respective APC units 87, 89, intensities of the forward pumping light and the backward pumping light can be maintained constant, and a photo-amplifying ratio can be retained constant. Furthermore, because the light sources 86, 88 are independently controlled by the respective APC units 87, 89, a good redundancy can be realized.

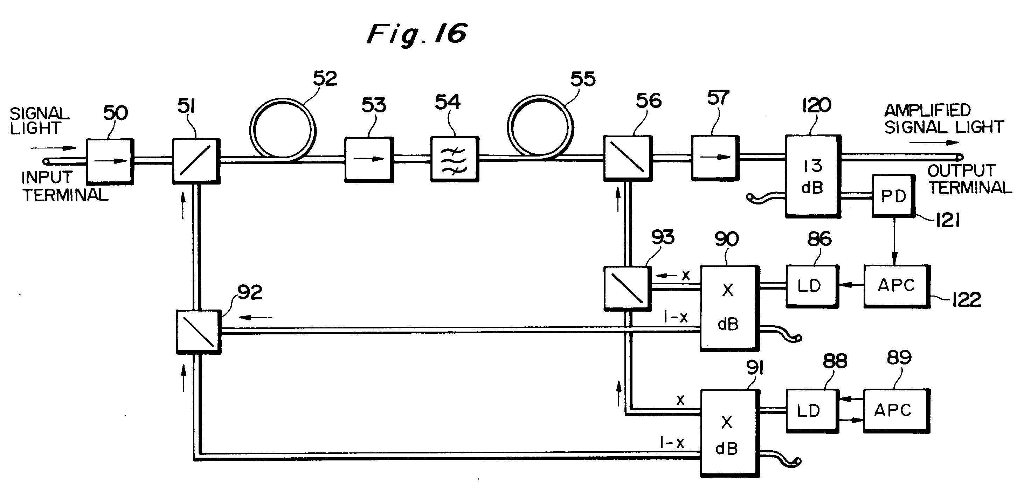

Then a sixteenth embodiment of this invention will be explained with reference to FIG. 16. This embodiment is a development of the twentieth embodiment of FIG. 15. In FIG. 16 members which are common with FIG. 15 and counterparts of FIG. 15 are represented by the same reference numerals as in FIG. 15.

Structural differences of this embodiment will be mainly explained for the explanation of this embodiment. An optical directional coupler 120 is inserted between the output terminal of a third optical isolator 57 and the output terminal of an optical fiber. This optical directional coupler 120 branches amplified signal light to a photoelectric device 121. The photoelectric device 121 photoelectrically converts the branched amplified signal light to an APC unit 122. The APC unit 122 controls a supply power to a light source for optical pumping 86 so that changes of the photoelectric signal are prevented.

Thus, according to this embodiment, amplifying ratios of the first and second amplification optical fibers 52, 55 are maintained constant, and an intensity of the amplified signal light is retained constant. Furthermore, because the optical amplification is two-stage amplification, high gains can be provided. In addition, because the light sources 86, 88 are independently controlled by respective APC units 122, 89, a good redundancy can be realized.

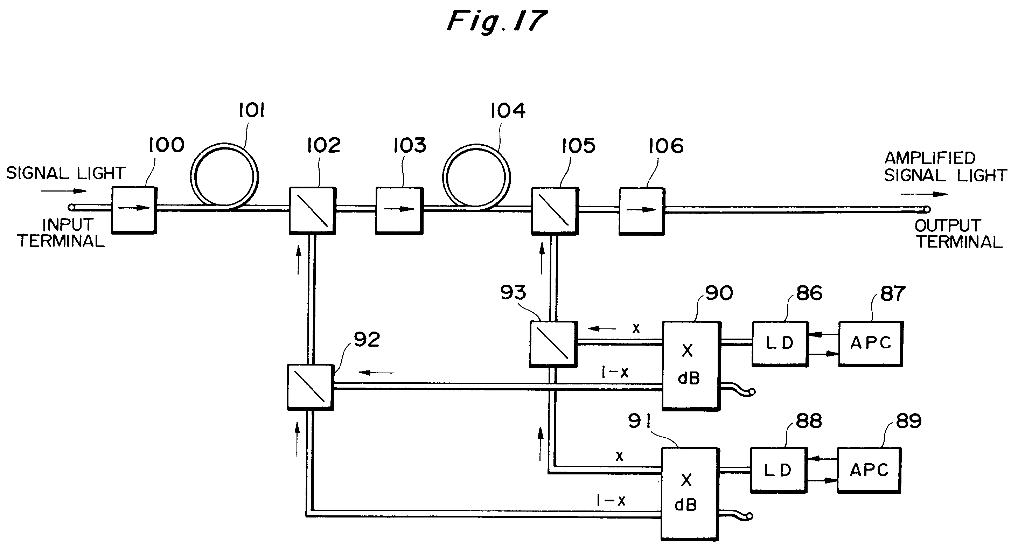

Next, a seventeenth embodiment of this invention will be explained. In FIG. 17 members which are common with FIG. 13 and counterparts of FIG. 13 are represented by the same reference numerals as in FIG. 13.

As shown in FIG. 17, forward pumping light from a third optical coupler 92 is supplied to a first amplification optical fiber 101 through a first optical coupler 102. Backward pumping light from a fourth optical coupler 93 is supplied to a second optical amplifier 104 through a second optical coupler 105.

Intensities of the pumping light of light sources for optical pumping 86, 88 are automatically controlled by APU units 87, 89 to be constant. A third and a fourth optical couplers 92, 93 couple branched pumping light from optical directional couplers 90, 91 to form the forward pumping light and the backward pumping light.

Thus, according to this embodiment, intensities of the forward pumping light and the backward pumping light are always maintained constant. Consequently amplifying ratios of the first and the second amplification optical fibers 101, 102 are maintained constant. Because the light sources 86, 88 are independently controlled by the respective APC units 87, 89, a good redundancy can be realized.

Next, an eighteenth embodiment of this invention will be explained. This embodiment is a development of the seventeenth embodiment of FIG. 17.

Structural differences of this embodiment from the seventeenth embodiment will be mainly explained for the explanation of this embodiment. An optical directional coupler 107 is inserted between the output terminal of a third optical isolator 107 and the output terminal of an optical fiber. The optical directional coupler 107 branches amplified signal light to a photoelectric device 108. The photoelectric device 108 photoelectrically converts the branched amplified signal light into a photoelectric signal and supplies the photoelectric signal to an APC unit 109. The APC unit 109 controls a supply power to a light source for optical pumping so as to prevent changes of the photoelectric signal.

Thus, according to this invention, amplifying ratios of the first and the second amplification optical fibers 101, 104 are maintained constant, and an intensity of the amplified signal light is maintained constant. Furthermore, because the optical amplification is two-stage amplification, high gains can be provided. Furthermore, because the light sources 86, 88 are independently controlled by the respective APC units 89, 89, a good redundancy can be realized.

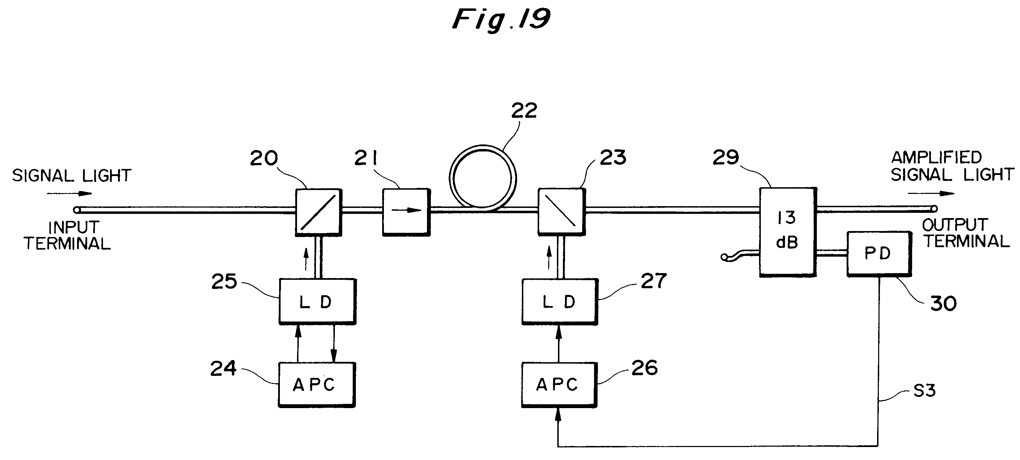

A nineteenth embodiment of this invention will be explained. This embodiment is a variation of the second embodiment of FIG. 2. In FIG. 19 members which are common with FIG. 2 and counterparts of FIG. 2 are represented by the same reference numerals as in FIG. 2.

Structural difference of this embodiment from the second embodiment will be explained for the explanation of this embodiment. In FIG. 19 a first optical coupler 20 supplies the pumping light of a first light source for optical pumping 25 as forward pumping light to the input terminal of an amplification optical fiber 22. On the other, hand, a second optical coupler 23 supplies the pumping light from a second light source for optical pumping 27 to the output terminal of the amplification optical fiber 27, whereby the optical coupler/divider 28 can be omitted.

An APC unit 24 controls an intensity of the pumping light of the first light source 25 to be constant, and an APU unit 26 controls an intensity of the pumping light of the second light source 27, based on the photoelectric signal S3 supplied through an optical directional coupler 29 and a photoelectric device 30 so that an intensity of amplified signal light is constant.

Such embodiment, which performs two-way pumping, has advantages that signal light of a wide wavelength range can be amplified with low noise figures, and the efficiency of the energy conversion from the pumping light to the signal light is high. Because the first and the second light sources are controlled separately from each other, loads do not concentrate on one of the lights sources, and a good redundancy can be provided.

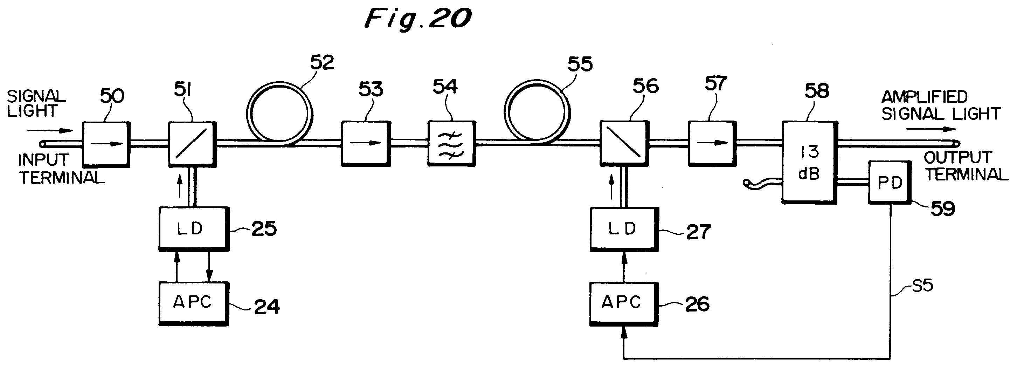

A twentieth embodiment of this invention will be explained with reference to FIG. 20. This embodiment is a variation of the sixth embodiment of FIG. 6. In FIG. 20 members which are common with FIG. 6 and counterparts of FIG. 6 are represented by the same reference numerals as in FIG. 6.

Structural differences of this embodiment from the sixth embodiment will be mainly explained for the explanation of this embodiment. In FIG. 20 a first optical coupler 51 supplies pumping light from a first light source for optical pumping as forward pumping light to the input terminal of a first amplification optical fiber 55, and on the other hand, a second optical coupler 56 supplies pumping light from a second light source for optical pumping 27 as backward pumping light to a second amplification optical fiber 55, whereby the optical coupler/divider 28 can be omitted.

An APC unit 24 controls an intensity of the pumping light of the first light source 25, and on the other hand, an APC unit 26 controls an intensity of the pumping light of the second light source 27 based on the photoelectric signal supplied through an optical directional coupler 58 and a photoelectric device 59 so that an intensity of the amplified signal light is constant.

According to this embodiment, amplifying ratios of the first and the second amplification optical fibers 52, 55 are constant, and an intensity of the amplified signal light is maintained constant. Furthermore, because the optical amplification is two-stage amplification, high gains can be provided. Because the light sources 25, 27 are independently controlled by the respective APU units 25, 27, a good redundancy can be realized.

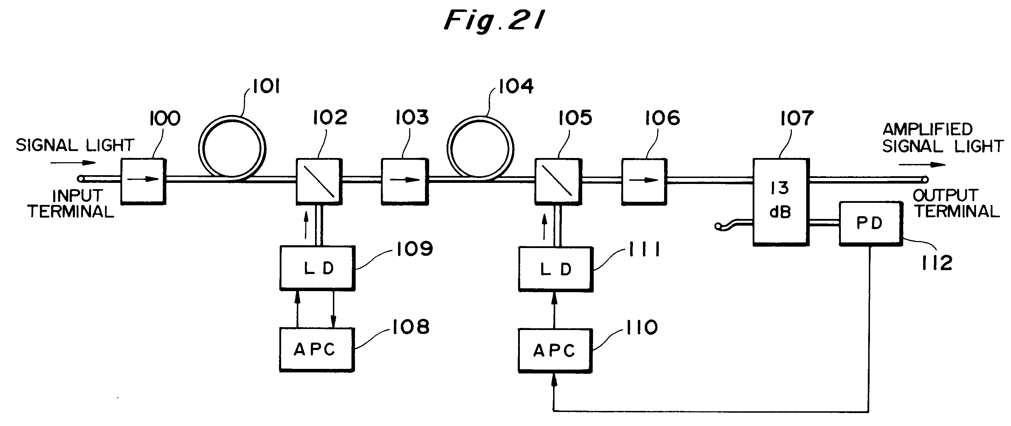

Next, a twenty-first embodiment of this invention will be explained with reference to FIG. 21. In FIG. 21 there is provided an optical amplification passage including a first optical isolator 100, a first amplification optical fiber 101, a first optical coupler 102, a second optical isolator 103, a second amplification optical fiber 104, a second optical coupler 105, a third optical isolator 106, and an optical directional coupler 107 inserted, in the stated order, in an optical fiber. Signal light amplified by the first and the second amplification optical fibers 41, 44 are outputted from the output terminal. A part of the signal light branched by the optical directional coupler 107 is photoelectrically converted into a photoelectric signal by a photoelectric device 112, and the photoelectric signal is supplied to an APC unit 110.

An APC unit 108 performs feedback control so that an intensity of 1.55 µm-wavelength pumping light from a first light source for optical pumping is always maintained constant. The APC unit 110 performs feedback-control so that an intensity of 1.55 µm-wavelength pumping light from a second light source for optical pumping.

The first optical coupler 102 supplies forward pumping light from the light source 109 to the first amplification optical fiber 101 while supplies signal light amplified by the first amplification optical fiber 101 to the second optical isolator. The second optical coupler 105 supplies backward pumping light from the second light source 111 to the second amplification optical fiber 104 while supplying the signal light amplified by the second amplification optical fiber 104 to the third optical isolator 106.

Thus, according to this embodiment, amplifying ratios of the first and the second amplification optical fiber 101, 104 are maintained constant. Furthermore, because the optical amplification is two-stage amplification, high gains can be provided. In addition, because the light sources 109, 111 are independently controlled by the respective APC units 108, 110, a good redundancy can be realized.

The first to the twenty-first embodiments, which have been described above, are typical embodiments, and this invention is not limited to these embodiments.

That is, in the embodiments of the optical fiber amplifier according to this invention using the optical coupler/divider 28, a two-inputs and two-outputs optical coupler/divider is used for coupling pumping light from two light sources for optical pumping and dividing the coupled pumping light into forward and backward pumping light. But the use of the two-inputs and two-outputs optical coupler/divider is not essential, and this invention includes the case that three or more light sources, and an optical coupler/divider for coupling the pumping light from these light sources and then dividing the coupled pumping light into forward and backward pumping light. The provision of a larger number of light sources, and the feedback control described in connection with the respective embodiments on the respective light sources can realize better redundancies.

In the above-described embodiments, Er-doped silica glass optical fibers are used as the amplification optical fibers for the amplification of 1.55 µm-wavelength. But Pr-doped fluoride optical fibers may be used for the amplification of 1.3 µm-wavelength signal light.

According to a plurality of the above-described embodiments of this invention in which pumping light from a plurality of light sources for optical pumping is incident on the optical coupler/divider to be coupled and then divided into forward and backward pumping light by a set intensity ratio, and the forward and the backward pumping light is supplied to one to two amplification optical fibers, and according to a plurality of the above-described embodiments of this invention in which the optical coupler-divider is not used, but in place each of light sources for optical pumping independently emit forward and backward pumping light, even when any of the light sources malfunctions, no instantaneous interruptions take place, and pumping light can be stably supplied to the amplification optical fiber(s). Consequently stable amplifying ratios can be provided, and good redundancies can be realized. Suitable combinations of the forward and the backward pumping light can provide improved noise-resistance characteristics, and improved efficiency of the conversion of the pumping energy.

From the invention thus described, it will be obvious that the invention may be varied in many ways. Such variations are not to be regarded as a departure from the spirit and scope of the invention, and all such modifications as would be obvious to one skilled in the art are intended to be included within the scope of the following claims.

## Claims

1. An optical fiber amplifier comprising;
optical amplifying means including one amplification optical fiber for amplifying signal light by exciting an added active material for optical amplification added, or two or more serially connected amplification optical fibers;
a plurality of optical coupling means for supplying a plurality of pumping light to said one, or said two or more amplification optical fibers; and
pumping light forming means including a plurality of pumping light sources for forming said a plurality of pumping light from light of a set-wavelength from the light sources for optical pumping.

2. An optical fiber amplifier according to claim 1, wherein
said a plurality of optical couplers including;
a first optical coupler inserted on the side of a signal light input terminal of said one amplification optical fiber, or of signal light input terminals of said two or more amplification optical fibers for supplying one of said a plurality of pumping light from the pumping light forming means to said signal light input terminal or said signal light input terminals; and
a second optical coupler inserted on the side of an signal light output terminal of said one, or of signal light output terminals of said two or more amplification optical fibers for supplying one of said a plurality of pumping light from the pumping light forming means to said signal light output terminal or said signal light output terminals.

3. An optical fiber amplifier according to claim 1, wherein said a plurality of optical coupling means are provided by a plurality of optical couplers which are inserted on the side of an output terminal of said one, or of output terminals of said two or more amplification optical fibers for supplying the pumping light from the pumping light forming means.

4. An optical fiber amplifier according to claim 3, wherein said pumping light forming means includes one, or two or more optical coupler/divider for coupling said a plurality of the set-wavelength light from said a plurality of light sources and deviding the coupled light into a plurality of pumpling light so as to form said a plurality of pumping light to be supplied to said one, or two or more amplification optical fibers, and supplying said a plurality of pumping light to said a plurality of optical coupling means.

5. An optical fiber amplifier according to claim 3, wherein the pumping light forming means includes:
one, or two or more optical dividing means for dividing one, or two or more light out of said a plurality of the set-wavelength light from the light sources into light groups having a set division ratio;
one, or two or more optical coupler/divider for coupling selected ones of the light groups, or the remaining set-wavelength light and a selected one of the light groups, whereby said a plurality of pumping light to be supplied to said one, or said two or more amplification optical fibers are formed.

6. An optical fiber amplifier according to any one of claims 1, 4, and 5, wherein the pumping light forming means includes automatic power control means for automatic controlling a supply power to the respective. light sources, whereby deflections of intensities of the respective pumping light are suppressed.

7. An optical fiber amplifier according to anyone of claims 1, 4, and 5, wherein the pumping light forming means includes automatic power control means for automatic controlling a supply power to the respective. light sources, whereby an intensity of a total of the respective pumping light is constant.

8. An optical fiber amplifier according to any one of claims 1, 4, and 5, wherein the pumping light forming means includes automatic power control means for detecting intensities of light of the set wavelentghs from the respective light sources, detecting an intensity of signal light amplified by said one, or said two or more amplification optical fibers, and based on results of these detections, supply powers to the respective light sources are automatically controlled so that deflections of the light of set-wavelengths are suppressed.

9. An optical fiber amplifier according to any one of claims 1, 4, and 5, wherein intensities of the respective set-wavelength light from the respective light sources, detecting intensity of signal light amplified by said one, or two or more amplification optical fibers are detected, and based on results of these detections, supply powers to the respective light sources are automatically controlled so that an intensity of a total of the respective pumping light is constant.

10. An optical fiber amplifier according to any one of claims 1 to 5, wherein said one, or said two or more amplification optical fibers are an Er-doped quartz optical fiber or Er-doped silica glass optical fibers, or a Pr-doped fluoride optical fiber or Pr-doped optical fibers.

11. An optical fiber amplifier according to any one of claims 1 to 9, wherein said a plurality of pumping light is laser beam of a 1.48 µm or 0.98 µm wavelength.

12. An optical fiber amplifier according to any one of claims 1 to 9, wherein said a plurality of pumping light is laser beam of a 1.3 µm 1.0 µm wavelength.
